# EUROPÄISCHE PATENTSCHRIFT

(11) **EP 3 169 946 B1**
(45) Veröffentlichungstag und Bekanntmachung des Hinweises auf die Patenterteilung: **16.01.2019**
(21) Anmeldenummer: 15736422.5
(22) Anmeldetag: 02.07.2015
(51) Int. Cl.: F25B 21/00, F25B 23/00, F25B 25/00, F28D 15/02

(54) **KLIMATISIERUNGSEINRICHTUNG MIT ZUMINDEST EINEM WÄRMEROHR, INSBESONDERE THERMOSIPHON**
AIR CONDITIONING DEVICE HAVING AT LEAST ONE HEAT PIPE, IN PARTICULAR THERMOSIPHON
DISPOSITIF DE CLIMATISATION ÉQUIPÉ D'AU MOINS UN CALODUC, EN PARTICULIER UN THERMOSIPHON

(30) Priorität: 15.07.2014 DE 102014010476
(43) Veröffentlichungstag der Anmeldung: 24.05.2017
(73) Patentinhaber: Fraunhofer Gesellschaft zur Förderung der angewandten Forschung E.V., 80686 München (DE)
(72) Erfinder: KÖNIG, Jan, 79112 Freiburg (DE); BARTHOLOMÉ, Kilian, 79285 Ebringen (DE)
(74) Vertreter: Lemcke, Brommer & Partner Patentanwälte Partnerschaft mbB
(86) Internationale Anmeldenummer: PCT/EP2015/065071
(87) Internationale Veröffentlichungsnummer: WO 2016/008732

(56) Entgegenhaltungen:
- EP-A2- 0 084 929
- US-A1- 2004 182 086
- US-A1- 2011 113 791

## Beschreibung

Die Erfindung betrifft eine Klimatisierungseinrichtung mit zumindest einem Wärmerohr, insbesondere einem Thermosiphon.

Wärmerohre zeichnen sich durch eine hohe Wärmestromdichte und sehr gute Wärmeübertragungseigenschaften aus, so dass an einem ersten thermischen Kontaktende, auch als Verdampfer bezeichnet, ein flüssiges Arbeitsmedium verdampft wird und am anderen thermischen Kontaktende, auch als Kondensator bezeichnet, des dort zunächst kälteren Wärmerohres der Arbeitsmitteldampf kondensiert und dabei seine latente Verdampfungswärme als Kondensationswärme wieder abgibt, wobei eine Wärmeübertragung durch Phasenwandlung unter Freisetzung der latenten Verdampfungs- bzw. Kondensationswärme des Arbeitsmediums einen besonders günstigen und vorteilhaften Wirkungsgrad der Wärmeübertragung impliziert.

Wärmerohre werden daher als sehr effiziente Wärmeübertrager z. B. zur Chipkühlung in Computern oder zur Wärmeabfuhr von Ölpipelines in Permafrostboden eingesetzt. Das Wärmerohr ist ein mit einem Arbeitsmedium (z. B. Wasser oder Ammoniak) gefülltes, gekapseltes Volumen. Der Druck in dem Wärmerohr ist dabei so eingestellt, dass das Arbeitsmedium bei gewünschter Arbteitstemperatur sowohl in flüssiger, als auch in gasförmiger Form vorliegt. Durch Erwärmung einer Seite des Wärmerohres kommt es zum Verdampfen des Arbeitsmediums und Kondensation des Arbeitsmediums an der kalten Seite. Der Rücktransport des flüssigen Arbeitsmediums kann dabei entweder durch Kapillarkräfte ("*Heatpipe*") oder Schwerkraft ("(*ZweiPhasen-)Thermosiphon*") geschehen.

Andererseits arbeiten heutige Kühl- und Klimatisierungssysteme in der Regel kompressorbasiert und benötigen daher ein Kältemittel, wobei diese allerdings in der Regel wenig handhabungs- und umweltfreundlich, ggf. auch leicht entzündlich sind.

Es ist darüber hinaus bekannt, dass Kühleinrichtungen mit Hilfe thermoelektrischer Generatoren bzw. von Peltier-Elementen als Alternative zu derartigen kompressorbasierten Systemen realisiert werden. Diese Effekte treten jedoch nur mit verhältnismäßig geringem Temperaturhub bzw. geringer Effizienz auf, so dass auch Kühlelemente unter Ausnützung des elektro- bzw. magnetokalorischen Effektes entsprechender elektro- bzw. magnetokalorischer Materialien entwickelt worden sind.

Durch das Anlegen eines elektrischen und/oder magnetischen Feldes an ein elektrokalorisches oder magnetokalorisches Material ändert dieses aufgrund der Ausrichtung der elektrischen bzw. magnetischen Momente und der damit verbundenen Entropie-Herabsetzung seine Temperatur - in der Regel wird es erwärmt. Koppelt man an solche in einem elektrischen und/oder magnetischen Feld befindlichen Materialien einen Wärmetauscher an, kann diese Wärme abgeführt und das Material wieder auf Umgebungstemperatur abgekühlt werden. Wird nun das elektrische und/oder magnetische Feld abgeschaltet, kommt es aufgrund der entstehenden Unordnung der elektrischen bzw. magnetischen Momente zur Abkühlung des Materials, so dass durch Kopplung desselben an ein Reservoir dieses auf Temperaturen unterhalb der Umgebungstemperatur abgekühlt werden kann. Dies wird als elektrokalorischer bzw. magnetokalorischer Effekt bezeichnet. Ist die Temperaturänderung bei Anlegen eines Feldes positiv (z.B. bei ferro- und paramagnetischen Stoffen), so spricht man von einem konventionellen (positivem) Effekt, wohingegen bei negativer Temperaturänderung bei Anlegen eines Feldes von einem negativen Effekt gesprochen wird (z.B. bei antiferromagnetisch gekoppelten Systemen).

Ebenfalls kann durch das angelegte elektrische und/oder magnetische Feld eine Änderung der Kristallstruktur bewirkt werden, wobei durch die strukturelle Entropie-Änderung ebenfalls ein Abkühl- oder Aufheizeffekt beobachtbar ist. Dies wird als inverser kalorischer Effekt bezeichnet. Dieser Effekt kann den oben genannten elektrokalorischer bzw. magnetokalorischer Effekt unterstützen, wobei sich beide Effekte aufsummieren, oder einander gegenwirken, wobei sich dann die Effekte subtrahieren.

Diese Effekte bzw. Prozesse können zur Klimatisierung bzw. Kälteerzeugung genutzt werden.

Ein Kältesystem unter Kopplung einer Mehrzahl von Wärmerohren mit einem magnetokalorischen Materialblock im Einfluss eines Magnetfeldes ist aus der US 2004/0182086 A1 bekannt. Eine weitere Verbesserung der Wärmeübertragungscharakteristik zwischen dem magnetokalorischen Material und dem Arbeitsmedium der Wärmerohre ist jedoch zur Erreichung höherer Kühlleistungen notwendig, nachdem das magnetokalorische Material sich jeweils im Kontakt mit dem Außenumfang der Wärmerohre befindet, wobei der Kontakt einem thermischen Widerstand gleichkommt. Eine Kopplung unidirektionaler Wärmerohre mit elektrokalorischen Elementen zeigt auch die US 4 757 688 A1.

Der Erfindung liegt die Aufgabe zugrunde, eine Klimatisierungseinrichtung, insbesondere Wärmepumpe zu schaffen, die es gestattet, mit verbessertem Wirkungsgrad sowohl zur Erwärmung als auch zur Kühlung einer Umgebung der Klimatisierungseinrichtung beizutragen. Insbesondere soll dies unter Ausnutzung der latenten Wärme eines Arbeitsmediums erfolgen.

Diese Aufgabe wird erfindungsgemäß durch eine Klimatisierungseinrichtung nach Anspruch 1 gelöst.

Die Erfindung zeichnet sich dadurch aus, dass das thermisch aktive, elektrokalorische oder magnetokalorische Material in ein Wärmerohr insbesondere einen Thermosiphon integriert ist, wobei insbesondere dafür gesorgt ist, dass das Wärmerohr in einer Richtung gut wärmeleitend ist, jedoch in der anderen, entgegengesetzten Richtung praktisch kein merklicher Wärmetransport stattfindet ("thermische Diode") und dabei die latenten Wärme eines Arbeitsmediums ausnutzt, wodurch eine hohe Kühlleistung erzielt werden kann.
Zwischen dem elektro- oder magnetokalorischen Material in dem Wärmerohr und dem (zumindest einem) Arbeitsmedium in diesem, ist ein erster Wärmeübertragungsbereich gebildet, in dem das elektro- oder magnetokalorischen Material unter Feldeinfluss eines elektrischen und/oder magnetischen Feldes veranlasst wird, seine aus der Entropie-Änderung herrührende Erwärmung auf das Arbeitsmedium zu übertragen, wobei zur Vergrößerung der Effizienz dieses vorzugsweise seine Curie-Temperatur nahe der Arbeitstemperatur hat. Auf diese Weise wird das durch den Wärmeeintrag in seine gas- oder dampfförmige Phase überführte Arbeitsmedium mit höherem Energieinhalt versehen und die aufgenommene Wärme wird zu einem zweiten, im allgemeinen oberen Wärmeübertragungsbereich des Arbeitsmediums transportiert, indem dieses zumindest auf eine Wärmetauscher- bzw. Kondensator-Struktur trifft, an der das Arbeitsmedium zur Übertragung seiner latenten Wärme kondensiert, worauf es in den ersten Wärmeübertragungsbereich zurückgelangt. Bevorzugt geschieht das als Thermosiphon unter Einfluss der Gravitationskraft.
Vorzugsweise ist allerdings der Kondensationsbereich bzw. Kondensator des Wärmerohres einerseits als ein elektro- oder magnetokalorisches Element ausgebildet, das durch Feldbeeinflussung eines elektrischen und/oder magnetischen Feldes seinerseits eine elektro- oder magnetokalorische Wärmeübertragungsstruktur bildet und auf diese Weise eine Potenzierung des Erwärmungs- bzw. am gegenüberliegenden Ende Kühl-Effektes im Sinne einer Wärmepumpe zu erreichen.
Auf diese Weise ist es möglich, mehrere Wärmerohre in einer kaskadierten Anordnung miteinander zu verschalten.
In einer anderen, bevorzugten Ausführungsform können insbesondere auch eine Mehrzahl derartiger Wärmeübertragungsbereiche mit elektro- oder magnetokalorischen Material abschnittsweise innerhalb eines einzigen Wärmerohres angeordnet sein, wobei diese zugleich das Wärmerohr druckdicht abdichten, so dass eine Mehrzahl von Arbeitsräumen innerhalb eines Wärmerohres entstehen, die vorzugsweise jeweils durch ein elektro- oder magnetokalorisches Materialelement begrenzt sind (es kann aber auch bei einem Thermosiphon, der mit der Gravitationskraft als Rückflusskraft für das Arbeitsmedium arbeitet, ein oberes Ende des jeweiligen Arbeitsbereiches durch eine Kondensatoranordnung gebildet sein).

Innerhalb eines solchen, segmentierten Wärmerohres können auch unterschiedliche Arbeitstemperaturen, Arbeitsmedien sowie magnetokalorische Materialien unterschiedlicher Curie-Temperatur zum Einsatz kommen.

Durch bevorzugte Anordnung des elektro- oder magnetokalorischen Materials im Inneren des Wärmerohres zwischen einem ersten Wärmeübertragungsbereich, z. B. in einem ersten, unteren Bereich desselben und vorzugsweise in einem zweiten, z. B. oberen Wärmeübertragungsbereich desselben in unmittelbarem, benetzenden Kontakt mit dem Arbeitsmedium des Wärmerohres (z. B. Wasser), kommt es zu einem innigen thermischen Kontakt zwischen dem elektro- oder magnetokalorischen Material und dem flüssigen oder gas- bzw. dampfförmigen Arbeitsmedium innerhalb des Wärmerohres und damit zu einer besonders hohen Wirksamkeit des elektro- oder magnetokalorischen Effekts zur Wärmeabgabe von dem Wärmerohr im Bereich seines insbesondere oberen Endes, in dem das verdampfte Arbeitsmedium kondensiert und zur Kühlung (Wärmeentzug) von dem Wärmerohr im Bereich seines insbesondere unteren Endes, in dem das elektro- oder magnetokalorische Material in unmittelbarem Kontakt mit dem flüssigeren Arbeitsmedium dessen Verdampfung unter Erwärmung durch ein anliegendes elektrisches und/oder magnetisches Feld bewirkt.

Vorzugsweise ist ein erstes elektro- oder magnetokalorisches Materialelement im Bereich des ersten Endes des Wärmerohres und ein zweites elektro- oder magnetokalorisches Materialelement im Bereich des zweiten Endes des Wärmerohres integriert.

Unter Verwendung eines Wärmerohres als Thermosiphon wird insbesondere eine vertikale Anordnung des oder der Wärmerohre bevorzugt, um einen Wärmetransport mit Vorzugsrichtung zu gewährleisten.

Vorzugsweise ist mit dem Wärmerohr ein erster Wärmetauscher, insbesondere Kühlkörper, in wärmeleitender Verbindung mit zumindest einem ersten elektro- oder magnetokalorischen Materialelement, insbesondere an einem unteren Ende des Wärmerohres angeordnet und ist ein zweiter Wärmetauscher, insbesondere Wärmekörper, an einem oberen Ende des Wärmerohres vorgesehen.

Vorzugsweise ist innerhalb des Wärmerohres, insbesondere einer Heatpipe, eine regelbare thermische Verbindung zwischen dem ersten und zweiten Ende desselben eingerichtet, wie z. B. durch ein Druck- oder Thermoventil zwischen dem ersten und zweiten Ende des Wärmerohres realisiert werden kann.

Befindet sich z. B. das elektro- bzw. magnetokalorische Materialelement im ersten Wärmeübertragungsbereich, z. B. am unteren Ende des Wärmerohres, Heatpipe bzw. Thermosiphons, im elektrischen und/oder magnetischen Feld, erwärmt sich das Material. Hierdurch wird das in Kontakt mit dem vorgenannten Material befindliche Arbeitsfluid innerhalb des Wärmerohres verdampft und steigt nach oben bzw. strömt zum anderen Ende des Wärmerohres. Dort kondensiert der Arbeitsmitteldampf an einem Kondensator, der vorzugsweise ebenfalls aus einem elektro- bzw. magnetokalorischen Material, welches sich zu diesem Zeitpunkt nicht in einem elektrischen und/oder magnetischen Feld befindet, besteht oder dieses aufweist. Durch den Verdampfungs-/Kondensationsprozess wird dabei sehr viel Wärme von dem ersten, elektro- oder magnetokalorischen Materialelement des ersten, vorzugsweise in einem unteren Ende des Wärmerohres angesiedeltem Wärmeübertragungsbereiches auf das zweite Materialelement aus elektro- oder magnetokalorischen Material im zweiten, vorzugsweise oberen, Wärmeübertragungsbereich abgegeben. Wird nun beispielsweise das obere, nur beispielsweise an einem zweiten Ende des Wärmerohres oder im zweiten Wärmeübertragungsbereich befindliche elektrokalorische oder magnetokalorische Material einem elektrischen und/oder magnetischen Feld ausgesetzt und das Feld am ersten Wärmeübertragungsbereich (vorzugsweise unteren Ende des Wärmerohres) abgeschaltet bzw. dieser erste Wärmeübertragungsbereich aus einem elektrischen und/oder magnetischen Feld herausbewegt, erwärmt sich das obere bzw. im zweiten Wärmeübertragungsbereich des Wärmerohres befindliche elektro- oder magnetokalorische Materialelement und das andere, vorzugsweise untere und im ersten Wärmeübertragungsbereich befindliche elektro- oder magnetokalorische Materialelement kühlt ab, wobei auch zuverlässig ein Wärmeaustausch zwischen dem oberen, zweiten elektro- oder magnetokalorischen Materialelement und dem ersten oder unteren elektro- oder magnetokalorischen Materialelement (erster Wärmeübertragungsbereich)vermieden ist.

In ihrer allgemeinen Grundanordnung erstreckt sich die Erfindung auch auf die Anwesenheit nur eines elektro- oder magnetokalorischen Materials als Erwärmungsstruktur für ein Arbeitsmedium des Wärmerohres, insbesondere Thermosiphons, bei dem ein unidirektionaler Wärmetransport und in Gegenrichtung nur ein Stofftransport des Arbeitsmediums vorgesehen ist, z. B. im oberen Bereich des Wärmerohres bzw. Thermosiphons sich nur ein Kondensator bzw. eine Kondensationsstruktur für das Arbeitsmedium befindet.

Herkömmliche Klimatisierungssysteme arbeiten in der Regel mit aktiv gepumpten Flüssigkeiten als wärmeübertragende Medien. Dabei ist durch die konvektive Wärmeübertragung an der Grenzfläche der Wärmeübertrag von dem elektro- oder magnetokalorischen Material auf das Fluid der beschränkende Faktor der Klimatisierungseinrichtung. Hingegen kann erfindungsgemäß durch die Nutzung der Verdampfungsenthalpie des Fluids in Wärmerohren pro Fluidmolekül eine wesentlich höhere Wärmemenge transportiert werden und somit die Kühlleistung eines durch eine Kombination eines Wärmerohres (Heatpipe) mit integriertem bzw. innerhalb desselben angeordneten elektro- oder magnetokalorischen Materialien signifikant erhöht werden.

Es können allerdings auch stationäre schaltbare Feldquellen für eine wechselweise Feldbeeinflussung des ersten oder zweiten elektro- oder magnetokalorischen Materiales vorgesehen sein, wie z. B. ein Elektromagnet, der wahlweise das erste oder zweite elektro- oder magnetokalorische Material beeinflusst.

Vorzugsweise ist die Klimatisierungseinrichtung durch ein Wärmerohr in Verbindung mit einer Quelle eines elektrischen und/oder magnetischen Feldes und vorzugsweise einer Relativbeweglichkeit zwischen Wärmerohr und Felderzeuger, insbesondere für eine alternative Feldbeeinflussung des ersten oder eines zweiten elektro- oder magnetokalorischen Materiales innerhalb des Wärmerohres gekennzeichnet.

Bei Verwendung eines Elektromagneten kann die Feldbeeinflussung des elektro- oder magnetokalorischen Materials durch das Schalten des Elektromagneten gesteuert und in diesem Fall bei Verwendung von elektro- oder magnetokalorischen Material in einem ersten und einem zweiten Wärmeübertragungsbereich, die miteinander durch das Arbeitsmedium "verbunden" sind, eine Relativbewegung zwischen Feld und elektro- oder magnetokalorischem Material vermieden werden.

Vorzugsweise ist mit dem Wärmerohr der Klimatisierungseinrichtung ein Kondensator, insbesondere aus elektro- oder magnetokalorischen Material, und andererseits ein Verdampfer, insbesondere aus elektro- oder magnetokalorischen Material, verbunden, wobei letzterer zumindest temporär einem elektrischen und/oder magnetischen Feld eines Felderzeugers ausgesetzt ist.

In einer besonders bevorzugten Ausgestaltung der Erfindung ist das elektro- oder magnetokalorische Material mit einer vergrößerten Kontaktfläche zu einem benachbarten Arbeitsfluid versehen, insbesondere mit einer Mikro- oder Nanostruktur versehen, so dass ein sehr großer Wärmeübergang zwischen dem elektro- oder magnetokalorischen Material einerseits und dem Arbeitsfluid innerhalb des Wärmerohres andererseits, das durch die Feldbeeinflussung des elektro- oder magnetokalorischen Materiales verdampft wird, besteht.

Weitere, bevorzugte Ausgestaltungen des Erfindungsgegenstandes sind in den übrigen Unteransprüchen dargelegt.

Zur weiteren Effizienzsteigerung solcher Klimatisierungseinrichtungen ist erfindungsgemäß eine Klimatisierungseinrichtung mit einer Wärmerohranordnung, aufweisend eine Mehrzahl von in Reihe angeordneten Wärmerohren, jeweils mit in diesen angeordneten elektro- oder magnetokalorischen Materialelementen und/oder eine Mehrzahl von in ein Wärmerohr (Thermosiphon) integrierter elektro- oder magnetokalorischer Materialelemente, die im Wärmerohr mehrere gasdichte Segmente (Arbeitsbereiche) ausbilden, vorgesehen.

In einer vorteilhaften Ausgestaltung der Erfindung ist zumindest ein thermisches Verbindungselement, insbesondere regelbares thermisches Verbindungselement zwischen zwei Wärmerohren oder innerhalb eines Wärmerohres zwischen zwei Arbeitsbereichen angeordnet, d. h. es kann der Wärmetransport von einem Wärmerohr zu einem benachbarten oder nächstfolgenden Wärmerohr oder von einem ersten Arbeitsbereich in einen zweiten Arbeitsbereich transportiert, insbesondere geregelt und eingestellt werden.

Die Erfindung wird nachstehend anhand von Ausführungsbeispielen und zugehörigen Zeichnungen näher erläutert.

In diesen zeigen:
- Figur 1: ein Wärmerohr in schematischer Darstellung als Ausführungsbeispiel einer Klimatisierungseinrichtung mit zumindest einem elektro- oder magnetokalorischen Materialelement im Bereich eines, hier des unteren, Endes eines als Thermosiphon ausgebildeten Wärmerohres;
- Figur 2: ein Wärmerohr in einer Darstellung ähnlich derjenigen in Fig. 1 doch mit ergänzten Wärmeübertragern auf der Kaltseite (unten) und der Warmseite (oben), ;
- Figuren 2a - 2c: Modifikationen des elektro- oder magnetokalorischen Materialkörpers 4 in vorgenannten Ausführungsbeispielen wie auch für nachfolgende Ausführungsbeispiele zur Strukturierung (Oberflächenvergrößerung) sowie elektrischen Unterteilungen (Unterdrückung von Joulscher Wärme durch Wirbelströme);
- Figur 3: ein Wärmerohr in der Darstellung ähnlich denjenigen von Fig. 1 und Fig. 2 als ein weiteres Ausführungsbeispiel mit dem aktiven elektro- oder magnetokalorischem Material als Schicht auf eine Kaltseite (unten) aufgetragen;
- Figur 4: eine kaskadierte Anordnung von Wärmerohren nach der Art der in den Fig. 1 bis 3 dargestellten Wärmerohre als Klimatisierungseinrichtungen zur Erhöhung des Temperaturhubs bzw. des Wärme- oder Kälteerzeugungseffektes;
- Figur 4a: ein weiteres Beispielsbeispiel einer kaskadierten Anordnung einer Mehrzahl von Wärmerohren ähnlich derjenigen in Fig. 4, jedoch für einen kompakten Aufbau unter Veränderung der Länge/Breite-Verhältnisse;
- Figur 4b: ein weiteres Ausführungsbeispiel einer kaskadierten Wärmerohranordnung als weiteres Ausführungsbeispiel einer Klimatisierungseinrichtung in kompakter Anordnung mit gegenüber Fig. 4a veränderten Länge/Breite-Verhältnis;
- Figur 5: ein weiteres Ausführungsbeispiel eines Wärmerohres als Thermosiphon in strukturierter Ausbildung des Verdampfers aus magnetokalorischem Material mit integriertem Wärmeleiter;
- Figur 5a: eine kaskadierte Anordnung von Wärmerohren bzw. Thermosiphons gemäß der Ausführungsform nach Fig. 5 unter thermischer Verbindung der oberen Kondensationsanordnungen mit dem Verdampfer aus magnetokalorischem Material der darüber liegenden Folgestufe mittels eines Wärmeleiters;
- Figur 5b: eine kaskadierte Wärmerohr- bzw. Thermosiphonanordnung gemäß der Ausführungsform nach Fig. 5a, wobei die Kondensatorenanordnungen der zwei unteren Wärmerohre bzw. Thermosiphons zumindest teilweise aus magnetokalorischem Material gebildet sind;
- Figur 6: ein weiteres Ausführungsbeispiel eines Wärmerohres bzw. Thermosiphons mit oberflächenvergrößertem, strukturiertem magnetokalorischem Verdampfer in schematischer Darstellung ähnlich wie die vorangehenden Ausführungsbeispiele;
- Figur 7: eine weitere Ausführungsform eines Wärmerohres bzw. Thermosiphons in schematischer Darstellung mit strukturiertem magnetokalorischem Materialkörper mit integrierten Wärmeleitern;
- Figuren 8a, 8b: Ausführungsbeispiele eines Wärmerohres bzw. Thermosiphons in schematischer Darstellung mit einem magnetokalorischem Material, sowohl im unteren Bereich (als Verdampfer) als auch im oberen Bereich (als Kondensator), wobei in Fig. 8a eine Magnetfeldbeeinflussung des Verdampfers und in Fig. 8b eine Magnetfeldbeeinflussung des Kondensators erfolgt;
- Figuren 9a, 9b: ein weiteres Ausführungsbeispiel eines Wärmerohres bzw. Thermosiphons mit einem richtungsabhängigen Druckventil, wobei Fig. 9a eine Darstellung mit geöffnetem Ventil und Magnetfeldbeeinflussung des Verdampfers mit einem gerichteten Wärmefluss von unten nach oben ist und Fig. 9b eine Darstellung mit geschlossenem Drucksteuerventil und dem Kondensator zugeordneten Magnetfeld ist;
- Figur 10: ein schematisches Temperatur-Zeit-Diagramm für die Ausführungsbeispiele der Wärmerohre bzw. Thermosiphons nach den Fig. 8a und 8b unter schematischer Darstellung des Temperaturverlaufes innerhalb des Wärmerohres bzw. Thermosiphos zeigt;
- Figuren 11a, 11b: eine kaskadierte Anordnung von Wärmerohren bzw. Thermosiphons in schematischer Darstellung mit einer regelbaren thermischen Verbindung zwischen Verdampfer und Kondensator unter Zuordnung entsprechender Magnetfeldquellen, beruhend auf Wärmerohren bzw. Thermosiphons gemäß Fig. 9, und
- Figuren 12a, 12b: ein Wärmerohr mit segmentiertem Innenaufbau mit einer Mehrzahl von Arbeitsbereichen, die durch elektro- oder magnetokalorische Materialelemente gebildet sind.
- Figuren 13a, 13b: ein Wärmerohr in der Darstellung ähnlich denjenigen von Fig. 1 und Fig. 2 als ein weiteres Ausführungsbeispiel in gebogener Form sowie ein daraus aufgebautes zirkulierendes System mit rotierenden Erzeugern eines elektrischen und/oder magnetischen Feldes.

### Vorbemerkung

Im Rahmen der vorliegenden Anmeldung und den nachfolgenden Erläuterungen verschiedener Ausführungsbeispiele werden die Begriffe "Wärmerohr" und "Thermosiphon" (als eine spezielle Konfiguration eines Wärmerohres) im Wesentlichen synonym verstanden, wobei im Rahmen der vorliegenden Erfindung, diese hier nicht als isotherme Wärmeleiter mit im stationären Zustand gleichmäßiger Wärmeverteilung verstanden werden, sondern als gerichtete Wärmeleiter, in denen ein Wärmetransport stets nur in einer Richtung, und zwar von der Verdampferseite in Richtung zur Kondensationsseite stattfindet, so dass nur ein Stoffrückfluss des Arbeitsmediums in der Kondensationsseite zur Verdampferseite aber kein Wärmerückfluss erfolgt.

Die Ausführungsbeispiele werden als Thermosiphon, d. h. Wärmeelemente erläutert, in deren Innerem der Arbeitsfluidrückfluss unter Schwerkrafteinfluss erfolgt.

Insoweit die Erfindung/die Ausführungsbeispiele derselben einen Thermosiphon betreffen, handelt es sich um ein durch Gravitationskraft betriebenes Wärmerohr in einer zumindest im Wesentlichen vertikalen Position.

Es sind jedoch auch andere Ausführungen denkbar, in denen z. B. Zentrifugal- oder auch von außen aufgebrachte Zwangskräfte für den Stofftransport (Arbeitsmedium) innerhalb des Wärmerohres oder einer Mehrfach-Anordnung derselben sorgen.

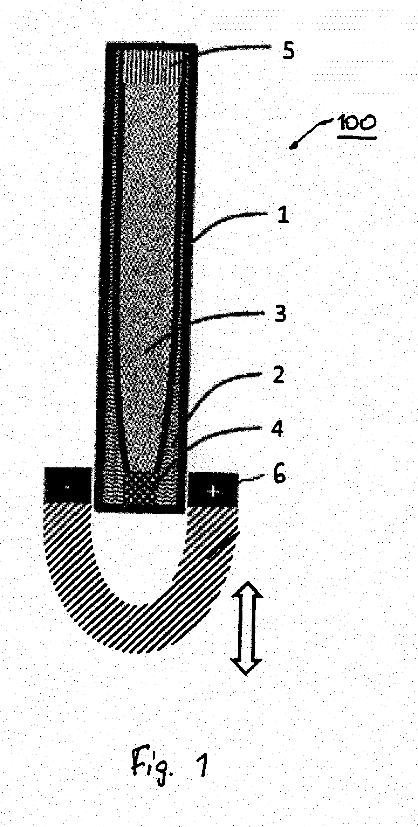

Die Ausführungsform nach Fig. 1 verdeutlicht einen Thermosiphon 100 als Ausführung eines Wärmerohres, in dem sich als hermetisch geschlossenes Gefäß innerhalb eines Gehäuses 1 unter angepasstem Druck ein Arbeitsmedium 2, z. B. Wasser, in flüssigem Zustand befindet, das durch einen Verdampfer, der hier als magnetokalorisches Materialelement ausgebildet ist, durch Anlegen eines Magnetfeldes durch Anordnen eines Magneten 6 (der hier hufeisenförmig ausgebildet ist) im Bereich des Verdampferelements 4 erwärmt und zumindest teilweise verdampft wird, um zumindest teilweise in ein gasförmiges Arbeitsmedium 3 überzugehen und aufzusteigen, d. h. sich vom Verdampferelement 4 in Richtung auf einen an der Oberseite innerhalb des Wärmerohres bzw. Thermosiphos 100 angeordneten Kondensators 5 zu strömen, an dem das gasförmige Arbeitsmedium 3 kondensiert oder aber bei bereits im ganzen Wärmerohr (Thermosiphon 100) verteilten Gas oder Dampf des Arbeitsmediums dort am Kondensator 5 durch Veränderung des verdampfungsbedingten Gasdrucks zu kondensieren, wobei sehr viel Wärme von dem unteren Verdampferelement 4 aus magnetokalorischem Material an den Kondensator 5 übertragen und als latente Kondensationswärme freigesetzt wird. Diese kann an der Oberseite des Wärmerohres bzw. Thermosiphons 100 nutzbar gemacht werden, ebenso wie durch Entfernen bzw. Abschalten des Magneten 6 von dem magnetokalorischem Verdampferelement 4 durch Rückorientierung dessen magnetischer Momente, das magnetokalorische Material 4 sich abkühlt und eine Kühlung der Umgebung auf eine Temperatur unterhalb der Umgebungstemperatur herbeiführt. Wesentlich ist die Anordnung des magnetokalorischen Materialelementes 4, der hier auch als magnetokalorischer Verdampfer 4 bezeichnet ist, innerhalb des Wärmerohres bzw. Thermosiphons 100 mit dem Ergebnis eines exzellenten Wärmeaustausches und Wärmeüberganges zwischen dem magnetokalorischen Materialelement 4 und dem umgebenden flüssigen bzw. verdampften Arbeitsmedium 2 bzw. 3 auf Grund der Erwärmung/Verdampfung des Arbeitsmediums 2 durch Nutzbarmachung des magnetokalorischen Effektes durch Anordnung des magnetokalorischen Materialelements 4 innerhalb des durch den Magneten 6 (vorzugsweise einem Permanentmagneten, bzw. einer speziellen Anordnung von Permanentmagneten, wie zum Beispiel bei einem so genannten Halbach-Zylinder oder bei einem linearen Halbach-Array), ausgebildeten Magnetfeldes. Bei dem so genannten Halbach-Zylinder werden einzelne Permanentmagnetblöcke so zu einem Zylinder zusammengefügt, dass die Richtung der Magnetisierung der einzelnen Blöcke so aufeinander abgestimmt ist, dass im Inneren ein besonders starkes homogenes Magnetfeld entsteht.

Das elektrokalorische bzw. magnetokalorische Material kann dabei z. B. als Blech, poröser Festkörper, Schaum, Draht, Pulver, Gewebe und/oder Dünnschicht auf einem Substrat vorliegen.

Es versteht sich unter den obigen Erläuterungen im Rahmen der vorliegenden Anmeldung von selbst, dass anstelle eines magnetokalorischen Materialelementes 4 auch ein elektrokalorisches Materialelement verwendet werden kann, und entsprechend dann anstatt des Magneten 6 ein elektrisches Feld und ein entsprechender Erzeuger wie z. B. ein Plattenkondensator als Feldquelle Verwendung finden kann.

Das magnetokalorische Materialelement 4 kann sich auch in einem elektromagnetischen Wechselfeld eines geschalteten Elektromagneten befinden.

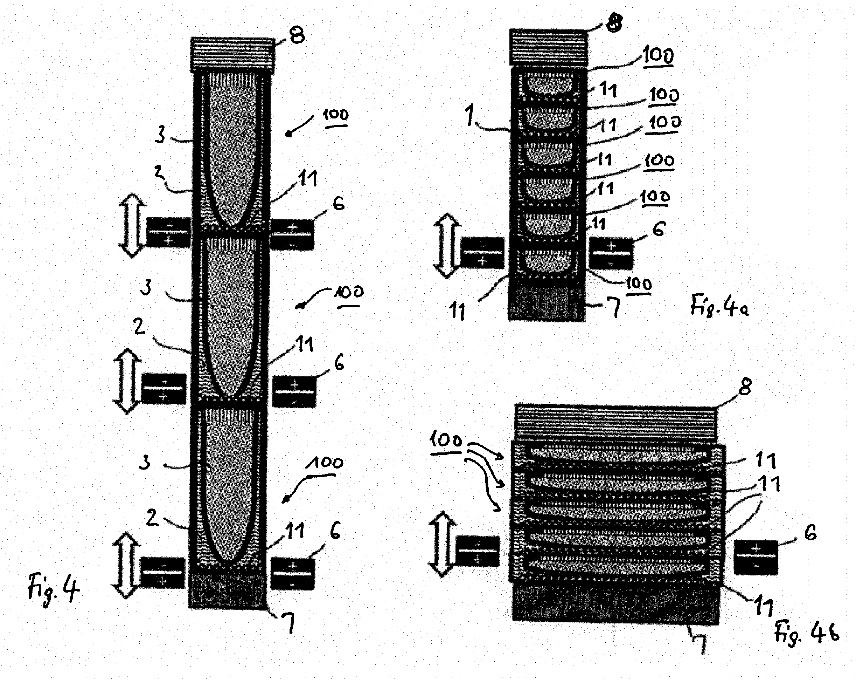

Es sei an dieser Stelle darauf hingewiesen, dass im ersten Ausführungsbeispiel der erste Wärmeübertragungsbereich zwischen magnetokalorischem Materialelement 4 und Arbeitsmedium 3 gebildet wird, während der zweiten Wärmeübertragungsbereich für die Aufnahme der latenten Wärme des Arbeitsmedium-Gases 5 durch einen Wärmeaustauscher als Kondensator 5 gebildet wird. Dieser kann allerdings auch seinerseits zum Aufbau von "Verstärkeranordnungen" aus elektro- oder magnetokalorischem Material bestehen oder solches Material enthalten, wie dies nachfolgend noch anhand weiterer Ausführungsbeispiele (Fig. 4, Fig. 5, Fig. 8 bis 11 sowie Fig. 12) für die Anordnung einer Mehrzahl von abgedichteten Arbeitsbereichen innerhalb eines Thermosiphons bzw. Wärmerohres (segmentiertes Wärmerohr) dargestellt ist.

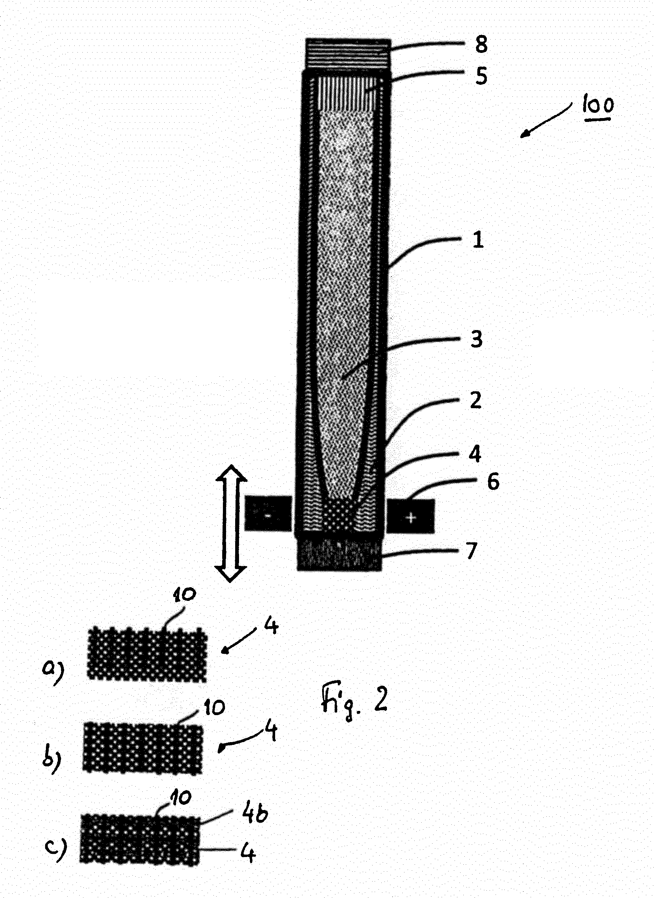

In der Ausführungsform nach Figur 2 ist das Wärmerohr bzw. der Thermosiphon 100 gegenüber der Ausführungsform nach Figur 1 insofern weiter ausgestaltet, als hier zugleich die in Verbindung mit der Oberseite (warm) bzw. mit der Unterseite (kalt) vorgesehenen Wärmetauscherelemente 7 (Wärmeübertragerkaltseite) und 8 (Wärmeübertragerwarmseite) mit dargestellt sind.

Ansonsten entspricht der Mechanismus der Wärme-Kälte-Erzeugung dem oben beschriebenen Mechanismus aufgrund des elektrokalorischen oder magnetokalorischen Effektes.

Obgleich in den nachfolgenden Ausführungsbeispielen nur noch der Einsatz magnetokalorischen Materials im Magnetfeld erläutert wird, ist dies nur beispielhaft zu verstehen. In gleicher Weise und mit den gleichen Mischungen könnte in diesen Ausführungsbeispielen auch elektrokalorisches Material im elektrischen Feld verwendet werden.

In den Figuren 2a, 2b und 2c sind unterschiedliche Ausführungsformen für das magnetokalorische Materialelement 4 (sinngemäß geltend auch für ein elektrokalorisches Element) als mögliche Modifikationen unter anderen schematisch dargestellt, wobei in Figur 2a das magnetokalorische Material 4 zusätzlich zur Verbesserung des Wärmeüberganges durch Wärmeleiter 10, die sich teilweise (Figur 2a) oder vollständig in das magnetokalorische Materialelement 4 hineinerstrecken, strukturiert ist, zur Verbesserung des Wärmeüberganges auf das Arbeitsmedium 2/3 innerhalb des Wärmerohres bzw. Thermosiphons 100.

Das elektrokalorische bzw. magnetokalorische Material 4 kann dabei zum Beispiel als Blech, poröser Festkörper, Folie, Schaum, Draht, Rohr, Pulver, und / oder Beschichtung vorliegen.

In Figur 2c ist das magnetokalorische Material 4 zusätzlich mit elektrischen Isolatorschichten 4b kombiniert, die dazu dienen, mögliche Wirbelströme innerhalb des magnetokalorischen Materiales 4 in Verbindung mit elektromagnetischen Wechselfeldern zu vermeiden und damit eine unerwünschte Erwärmung aufgrund Joulscher Wärme minimiert werden kann.

Wie auch in Figur 1 ist links neben dem Magneten 6 ein Doppelpfeil dargestellt, um zum Ausdruck zu bringen, dass nach dem Erwärmen des magnetokalorischen Materialelementes 4 durch das Magnetfeld des Magneten 6 dieser, vorzugsweise entlang des Thermosiphons 100, bewegt wird, so dass sich das magnetokalorische Materialelement 4 nicht mehr im Einflussbereich des Magneten 6 befindet und eine entsprechende Abkühlung durch Rückstellung der Momente des magnetokalorischen Materiales zur Erzielung einer Kühlwirkung an dem Wärmeübertrager 7 erfolgt. Selbstverständlich kann bei Verwendung eines Elektromagneten dieser auch einfach abgeschaltet werden bzw. kann der Thermosiphon bzw. das Wärmerohr 100 auch relativ zu einem stationären Magneten 6 längsbewegt werden, um die gleiche Wirkung zu erzielen. In der Regel dürfte es jedoch sinnvoll sein, den Magneten 6 entlang des Wärmerohres bzw. Thermosiphons 100 zu bewegen.

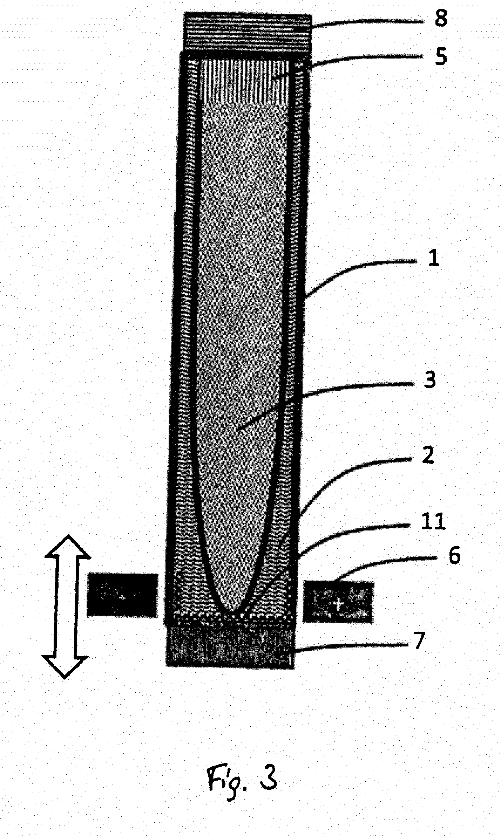

Die Ausführungsform des Wärmerohres bzw. Thermosiphons in Figur 3 unterscheidet sich von den vorher erläuterten Bauformen nur dadurch, dass ihr das magnetokalorische Materialelement als Innenbeschichtung 11 im unteren Bereich des Gehäuses 1 des Thermosiphons bzw. Wärmerohres 100 ausgebildet ist, zur Verbesserung des Wärmeüberganges und damit zur Verbesserung der Verdampferwirkung der elektrokalorischen Beschichtung 11 in Bezug auf das flüssige Arbeitsmedium des Wärmerohres bzw. Thermosiphons 100.

Figur 4 zeigt nun eine kaskadierte, in mehreren übereinander abfolgend angeordneten Stufen zusammengeführte Anordnung von Wärmerohren bzw. Thermosiphons der vorerläuterten Art, hier insbesondere nach der Bauform gemäß Figur 3 mit Ausführung des magnetokalorischen Materialelementes als Innenbeschichtung 11 im unteren Bereich des jeweiligen Wärmerohres bzw. Thermosiphons 100, wobei eine entsprechende vielfache Wirkung (gesteigerter Temperaturhub) des durch einen einzigen Thermosiphon bzw. ein einziges Wärmerohr 100 erreichbaren Klimatisierungseffektes an dessen Oberseite bzw. dessen Unterseite erreicht wird. Zur Einrichtung eines von unten nach oben gerichteten Wärmestromes wird die Magnetanordnung 6 jeweils von unten nach oben bewegt, wie dies durch die Doppelpfeile links zum Ausdruck gebracht ist. Auf diese Weise wird also die Kühlwirkung bzw. der Temperaturhub an der Unterseite der kaskadierten Anordnung bei dem Wärmeübertrager der Kaltseite 7 entsprechend vervielfacht, wie auch die Wirkung des Wärmeübertragers 8 an der oberen Warmseite der Vervielfacheranordnung.

In Figur 4 wird derselbe Magnet G' jeweils stufenweise vom unteren Thermosiphon bzw. Wärmerohr 100 zum mittleren und oberen in die angezeigte Position verschoben oder aber bei Verwendung von Elektromagneten werden diese in dieser Reihenfolge ein- bzw. ausgeschaltet.

Auf diese Weise wird ein gerichteter Wärmetransport nur von unten nach oben in Richtung des Wärmeübertragers 8 der Warmseite erzeugt, während gleichzeitig die Rückorientierung der magnetischen (oder elektrischen) Momente des magnetokalorischen (oder elektrokalorischen) Materiales 11 (Innenbeschichtung) für die Abkühlung des Wärmeübertragers 7 (Kaltseite) sorgt.

In vergleichbarer Weise wie in Figur 4 führt die Vervielfacheranordnung von Wärmerohren bzw. Thermosiphons 100 in noch gedrängterer und kompaktierter Ausführung gemäß Figur 4a zu einer Verstärkung der Klimatisierungswirkung sowohl auf der Wärmeseite (Wärmeübertrager 8) als auch auf der Kälteseite (Wärmeübertrager 7).

Die Magnetanordnung 6 wird von unten nach oben bewegt, so dass abfolgend von unten nach oben die magnetokalorischen Innenbeschichtungen 11 an der Unterseite der entsprechenden Wärmerohre bzw. Thermosiphons 100 durch die entsprechende Magnetfeldbeeinflussung erwärmt und andererseits die magnetokalorischen Beschichtungen 11 außerhalb des nach oben Magnetfeldes (Magnet 6) abgekühlt werden.

Auch Figur 4b beruht auf dem gleichen Wirkprinzip. Hier sind nur die Wärmerohre bzw. Thermosiphons in einer integralen Gehäuseanordnung 1 noch stärker komprimiert, um bestimmten baulichen Anforderungen der Klimatisierungseinrichtung gerecht zu werden.

Im Übrigen wird auf die obigen Erläuterungen zu Figur 4a verwiesen.

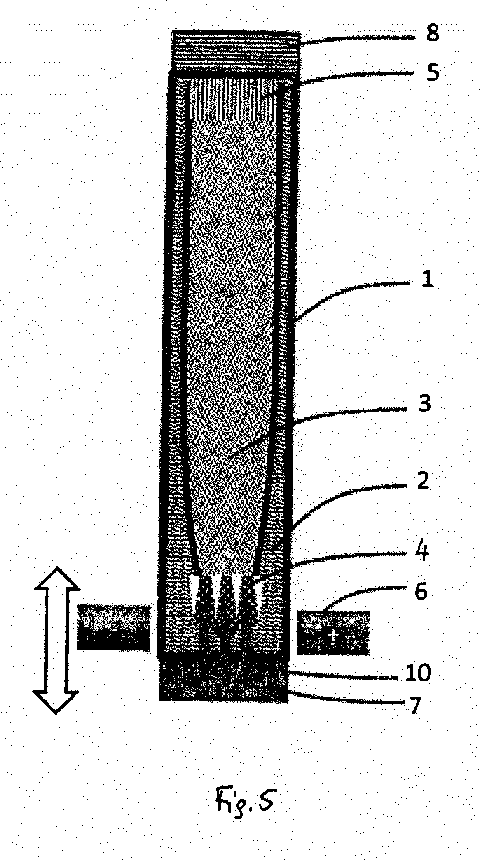

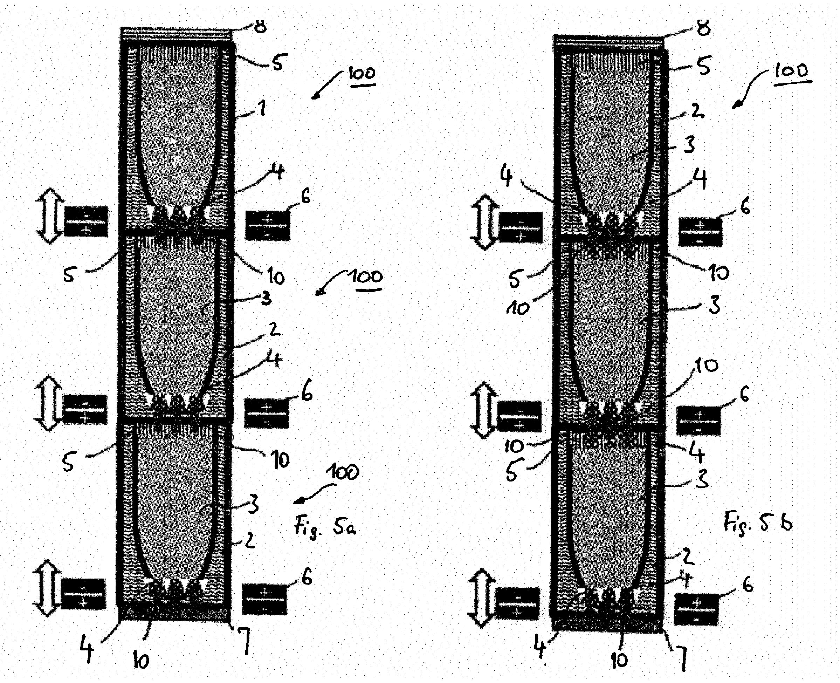

Figur 5 zeigt in schematischer Darstellung eine andere Ausführungsform eines Wärmerohres bzw. Thermosiphons 100 mit in vorteilhafter Weise weiter verbesserter Wärmeübergangscharakteristik von dem magnetokalorischen Material 4, hier in mehrere kegelförmige Elemente unterteilt durch Einsatz in das magnetokalorische Material 4 integrierter Wärmeleiter 10, wobei vorzugsweise dieser magnetokalorischer Verdampfer oder Absorber in einer Grenzfläche zwischen der flüssigen und der gasförmigen Phase 2 bzw. 3 des Arbeitsmediums platziert ist und damit über dem "Sumpf" mit dem der Nassanteil im Thermosiphon bzw. Wärmerohr 100 bezeichnet ist. Hierdurch wird die Verdampferwirkung der magnetokalorischen Elemente 4 durch deren Strukturierung einerseits weiter erhöht, andererseits bei Rückstellung der magnetischen Momente nach Entfernen bzw. z. B. relative Aufwärtsbewegen des Magneten 6 eine verbesserte Übertragung der Kühlleistung von dem magnetokalorischen Materialelement 4 auf den Wärmeübertrager 7 (Kaltseite) gewährleistet.

Obwohl dies hier nicht dargestellt ist, kann eine weitere Verbesserung des innigen Wärmekontaktes zwischen dem magnetokalorischen Material 4 und dem Arbeitsmedium 2 bzw. 3 durch Ausbildung des magneto- oder elektrokalorischen Materiales mit einer gut benetzenden Oberfläche erreicht werden und es können z. B. Mikro- oder Nanostrukturen zur Anwendung kommen, um die Wärmeübergangflächen möglichst groß auszubilden.

Obwohl dies hier ebenfalls nicht näher erläutert und dargestellt worden ist, kann mit einem solchen "integrierten" Wärmerohr oder Thermosiphon 100, der zugleich zumindest ein magneto- oder elektrokalorisches Material enthält und dem zugleich temporär ein Magnet(-feld) oder elektrisches Feld oder elektromagnetisches Feld zugeordnet ist, auch mit einem Peltier-Element thermisch gekoppelt werden, um hieraus einen zeitlich koordinierte Wärmeübertragung zwischen Wärmerohr oder Thermosiphon 100 und Wärmeübertrager 7 zu maximieren.

Wie nachfolgend noch erläutert, aber auch in Verbindung mit den schon kaskadierten (Mehrfach-)Anordnungen von in Reihe geschalteten Wärmerohren oder Thermosiphons 100 deutlich ist, können mehrere gleichartige oder auch hinsichtlich des eingesetzten magneto- oder elektrokalorischen Materiales unterschiedliche Wärmerohre oder Thermosiphons miteinander, insbesondere auch über zwischengeschaltete Wärmetauscher gekoppelt werden, wobei aufgrund der zunehmenden Temperaturen bei einer Wärmerohr- bzw. Thermosiphonsäule von unten nach oben vorzugsweise die magnetokalorischen Materialien in Wärmerohren oder Thermosiphons 100 mit höherer Temperatur eine andere (höhere) Curie-Temperatur aufweisen als die magneto- oder elektrokalorischen Materialien, die näher an der Kaltseite einer solchen Vervielfacheranordnung angeordnet sind.

Da der magnetokalorische Effekt eines magnetokalorischen Materials in der Nähe seiner Curie-Temperatur am größten ist, wird bevorzugt das jeweilige magnetokalorische Material in diesem Temperaturbereich als Arbeitstemperatur zu betreiben.

Es wird auf jeden Fall sichergestellt, dass durch entweder zusätzliche Schalt- oder Ventilelemente oder auch durch Gravitation stets ein unidirektionaler Wärmefluss im Allgemeinen von unten nach oben bzw. von der Kaltseite zur Warmseite erfolgt.

Ein solcher Wärmefluss kann auch durch zusätzliche Einleitung von Zwangskräften von außen, wie z. B. von Zentrifugalkräften in Verbindung mit einem rotierenden System unterstützt bzw. herbeigeführt werden.

In Figur 5a ist eine Vervielfacheranordnung, d. h. eine Dreifachanordnung von Thermosiphons bzw. Wärmerohren 100, wie sie in Figur 5 als Einzelelement dargestellt sind, aufgeführt, wobei die jeweils mit den magnetokalorischen Materialelementen 4 direkt verbundenen Wärmeleiter 10 jeweils mit dem Kondensator 5 der vorhergehenden Stufe thermisch gut leitend verbunden sind.

Auch hier wird dieselbe Magnetanordnung 6 jeweils von unten nach oben entsprechend der angegebenen Doppelpfeile bewegt, so dass ein einseitig gerichteter Wärmestrom von unten nach oben entsteht, so dass das Magnetfeld des Magneten 6 entsprechend entlang der Mehrfachanordnung der Thermosiphons bzw. Wärmerohre 100 (die in einem gemeinsamen Gehäuse 1 aufgenommen sind) von unten nach oben wandert.

In der rechten Vervielfacheranordnung gemäß Figur 5b ist der Klimatisierungseffekt der Gesamtanordnung noch deutlich dadurch vergrößert, dass nicht wie bisher dargestellt, nur der Verdampfer aus elektro- oder magnetokalorischem Material 4 besteht, sondern hier auch zumindest teilweise der Kondensator 5, so dass dann, wenn das Magnetfeld bzw. die Magnetanordnung 6 von der in Figur 5b unteren Position in die mittlere Position nach oben verlagert wird, ein gesteigerter Wärmetransport von den Kondensatoren der jeweiligen Wärmerohre zu den darüberliegenden Verdampfern des darüberliegenden Wärmerohres geführt werden kann.

Auch hierdurch kann der Wirkungsgrad der Gesamtanordnung wesentlich erhöht werden.

Auch hier wird dieselbe Magnetanordnung 6 entsprechend dem Wärmefluss von unten nach oben bewegt, so dass zunehmend das untere magnetokalorische Material 4 bzw. das in der mittleren Ebene angeordnete sowohl verdampfer- als auch kondensatorseitig vorgesehene magnetokalorische Material, nachdem es sich außerhalb des Magnetfeldes befindet, unter der Rückorientierung der magnetischen Momente abkühlt und sich auf diese Weise die Kühl- oder Kältewirkung bzw. der Temperaturhub der Gesamtanordnung aus Wärmerohren bzw. Thermosiphons 100 vervielfacht.

In der weiteren Ausführungsform einer Klimatisierungseinrichtung als Wärmerohr bzw. Thermosiphon 100 ist das elektro- oder magnetokalorische Materialelement 4 selbst als unterer Abschluss des Wärmerohres bzw. Thermosiphons 100 vorgesehen, bildet also praktisch das untere Wandungselement des Wärmerohres bzw. Thermosiphons 100 in der Größe der Oberflächenkonfiguration (hier zickzackförmig) zu dem Wärmeübertrager bzw. Wärmetauscher 7 der Kaltseite.

In Verbindung mit zusätzlich vorgesehenen Wärmeleitern 10 ist auf diese Weise eine hervorragend wärmeleitfähige Verbindung zwischen dem Wärmeübertrager 7 (Kaltseite) einerseits und dem magnetokalorischen Element andererseits, wie auch hinsichtlich der Verdampferwirkung des magnetokalorischen Elements 4 bezüglich des flüssigen Arbeitsmediums 2, gegeben.

Auf diese Weise lässt sich der Wärmewiderstand innerhalb der Anordnung weiter verringern und sich der magneto- bzw. elektrokalorische Effekt bestmöglich nutzen. Auch hier sorgt der Magnet 6 bzw. das entsprechende Magnetfeld für die Erwärmung des magnetokalorischen Materiales 4 und dessen Funktion als Verdampfer das flüssige Arbeitsmedium 2, wobei dann zur Abkühlung das Magnetfeld abgeschaltet bzw. der Magnet (z. B. Ringmagnet 6) nach oben oder in anderer Weise wegbewegt wird, so dass sich das magnetokalorische Materialelement 4 nicht mehr in dessen Feldbereich befindet.

Ein solches Wärmerohr bzw. Thermosiphon 100 ist ebenfalls besonders gut zur Ausbildung einer Vervielfacheranordnung durch säulenförmige Übereinanderanordnung ggf. unter zusätzlicher Ausbildung des Kondensators 5 zumindest teilweise als magnetokalorisches Materialelement geeignet.

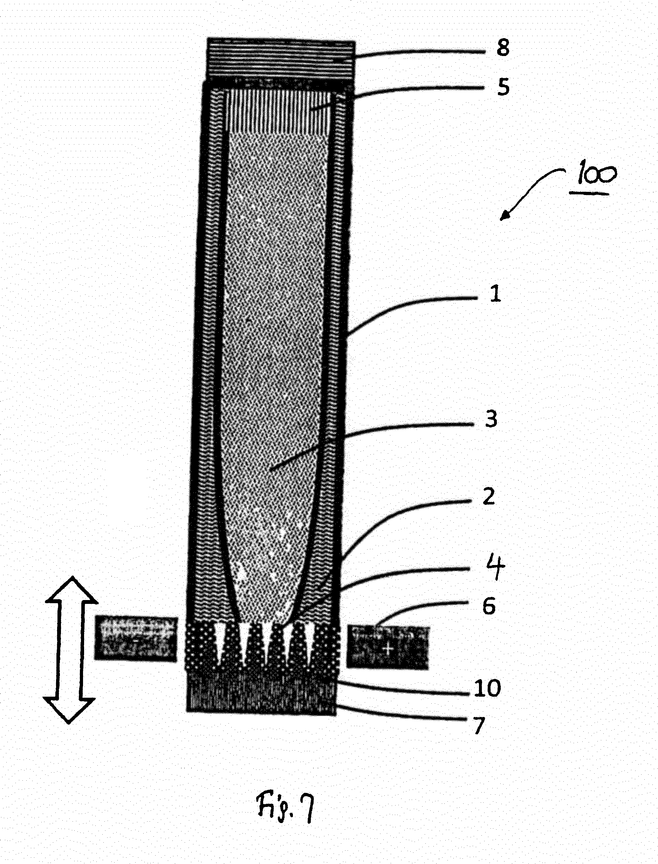

Dies gilt auch für die weitere Ausführungsform nach Figur 7, die einerseits ebenfalls einen strukturierten Abschluss des Thermosiphons bzw. Wärmerohres 100 aus magnetokalorischem Material selbst bildet, anderseits auch zumindest teilweise mit integrierten Wärmeleitern 10 versehen ist und eine hohe Wärmeübergangsfläche zu dem Wärmeübertrager 7 (Kaltseite) bereitstellt.

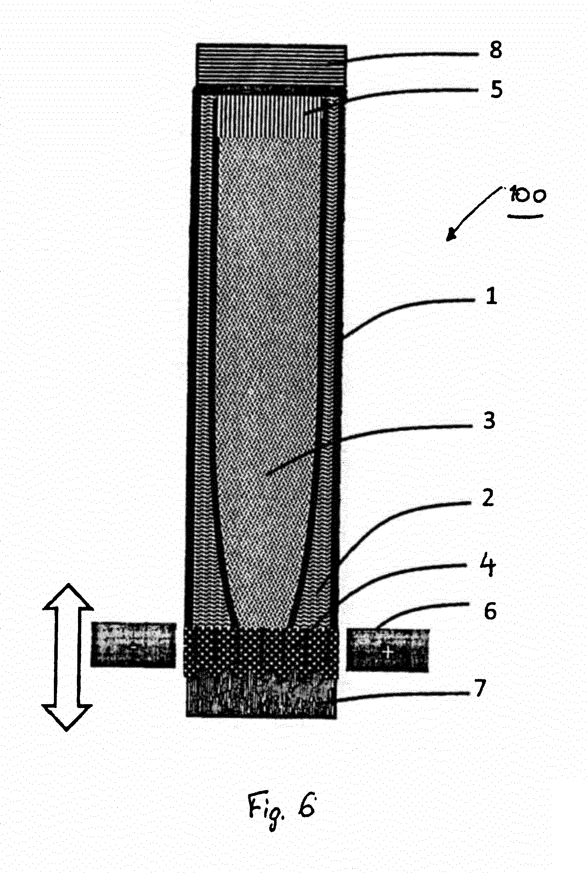

Ähnlich wie für das Ausführungsbeispiel nach Figur 6 wird auch hier eine besonders gute Wärmeübergangscharakteristik hinsichtlich der Wirkung des magnetokalorischen Elementes 4 als Verdampfer, insbesondere durch die in besonderem Maße vergrößerte Kontaktoberfläche durch eine Mehrzahl konischer magnetokalorischer Elemente als auch im Hinblick auf den Einsatz von Wärmeleitern zur Kaltseite 7 hin gewährleistet.

Die Wirkungen entsprechen den bereits oben für die anderen Ausführungsbeispiele beschriebenen.

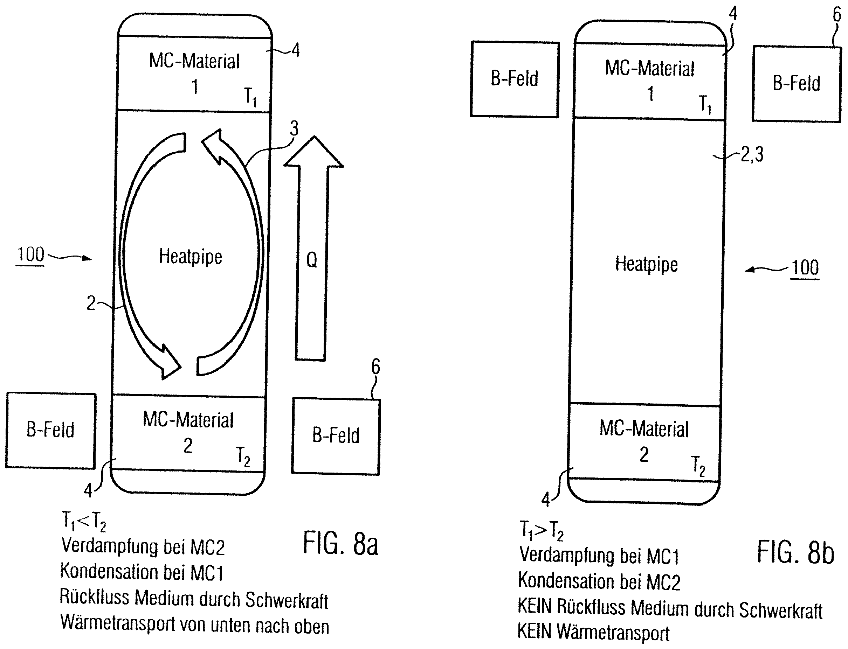

Wie in dem Ausführungsbeispiel gemäß Figur 5b bereits die Mehrfachanordnung von magneto- oder elektrokalorischen Materialelementen 4 innerhalb eines einzigen Wärmerohres bzw. Thermosiphos 100 in Verbindung mit einer säulenförmigen Vervielfacheranordnung bereits angesprochen wurde, wird diese besonders effiziente Ausbildungsform für eine hochwirksame Klimatisierungseinrichtung anhand der Figuren 8 bis 11 nochmals schematisch dargestellt und erläutert, wobei auch hier die Ausbildung eines gerichteten Wärmeflusses von unten nach oben (im Falle eines Thermosiphons bzw. raumlageunabhängig) von einem ersten Ende (Kaltende) zu einem zweiten Ende (Warmende) wesentlich ist.

Wie Figur 8 für den Ausgangszustand verdeutlicht, befindet sich in dem Wärmerohr bzw. Thermosiphon 100 ein erstes elektro- oder magnetokalorisches Material (es wird im Folgenden stets von dem Fall eines magnetokalorischen Materiales und einem Magnetfeld ausgegangen) am unteren Ende als Verdampfer für ein Arbeitsmedium innerhalb des unter Unterdruck stehenden Wärmerohres bzw. Thermosiphons 100 wobei ein weiteres, vorzugsweise ein eine höhere Curie-Temperatur aufweisendes magnetokalorisches Materialelement 4, hier als MC-Material 1 bezeichnet, am oberen Ende des Thermosiphons bzw. Wärmerohres 100 angeordnet ist, so dass, wie bereits erläutert, das erste magnetokalorische Material (MC-Material 2), das sich im Magnetfeld (B-Feld) befindet erwärmt und dieses als Verdampfer wirksam ist, wobei ein Wärmestrom Q nach oben steigt und bei dem magnetokalorischen Material MC-Material 1 kondensiert, wobei ein Rückfluss des verflüssigten Arbeitsmediums wieder nach unten unter Schwerkrafteinfluss erfolgt.

Das erste magnetokalorische Material MC 2 bildet also einen ersten Wärmeübertragungsbereich mit dem umgebenden Arbeitsmedium und das zweite magnetokalorische Material MC 1 bildet einen zweiten mit dem Arbeitsmedium 3 aus.

Die Temperatur T1 des oberen magnetokalorischen Materiales MC 1 ist in diesem Fall kleiner als die Temperatur T2 des unteren magnetokalorischen Materiales MC 2, das sich im Magnetfeld 6 des Magneten 6 befindet.

Ausgangspunkt für eine Vervielfacheranordnung ist nun die Verlagerung des Magnetfeldes, d. h. des entsprechenden Magneten 6 nach oben, so dass das obere magnetokalorische Material MC 1 unter Ausnutzung des magnetokalorischen Effektes erwärmt wird, während sich das untere magnetokalorische Material unter Rückmodifikation seiner Magnetpole abkühlt, allerdings in diesem Fall kein Wärmetransport und auch kein Rückfluss des Arbeitsmediums unter Schwerkrafteinfluss erfolgt, vielmehr Wärme aus der Umgebung an das unter magnetokalorische Material mit der kleineren Temperatur T2 abgegeben und dies damit gekühlt wird.

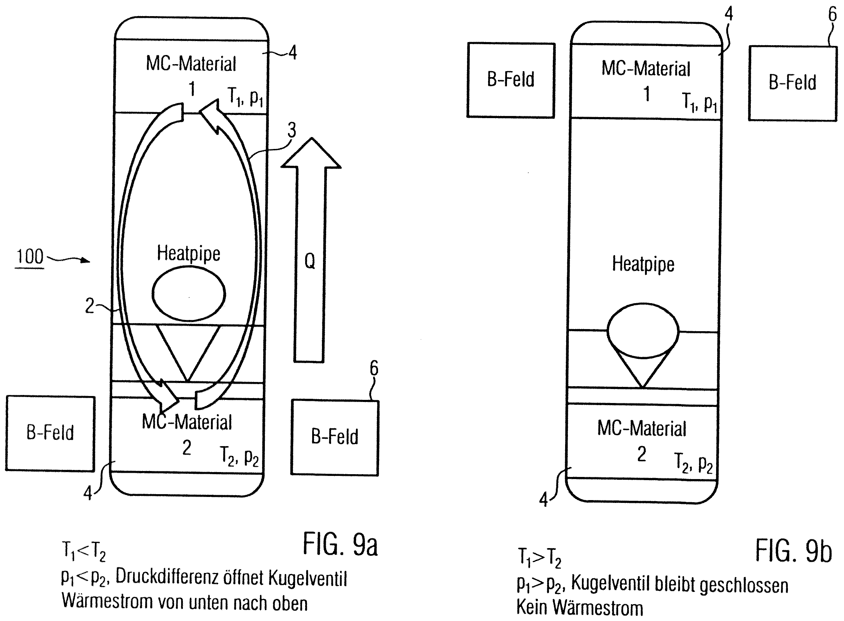

Zur Beförderung dieser Wirksamkeit und der Einrichtung eines gerichteten Wärmestromes von unten nach oben kann zusätzlich auch das Wärmerohr bzw. Thermosiphon 100 als thermische Diode mit einem zusätzlichen schaltbaren Wärmefluss, ventilgestützt oder gesteuert versehen sein, wobei eine solche Ausführung in der Figur 9a für ein geöffnetes Ventil 15, welches unter Druckdifferenz aufgrund der Verdampfung des flüssigen Arbeitsmediums öffnet, um den Wärmestrom Q in Richtung des oberen magnetokalorischen Materiales MC 1 zu führen, vorgesehen ist, während auf der rechten Seite in Figur 9b der geschlossene Zustand des Ventiles 15 aufgrund der Erwärmung des oberen magnetokalorischen Materiales und des dann dort höheren Druckes oberhalb des vorzugsweise als Kugelventil ausgebildeten Ventiles 15 dargestellt ist. Es kann auch eine Mehrzahl von Ventilen für einen schaltbaren Wärmefluss vorgesehen sein.

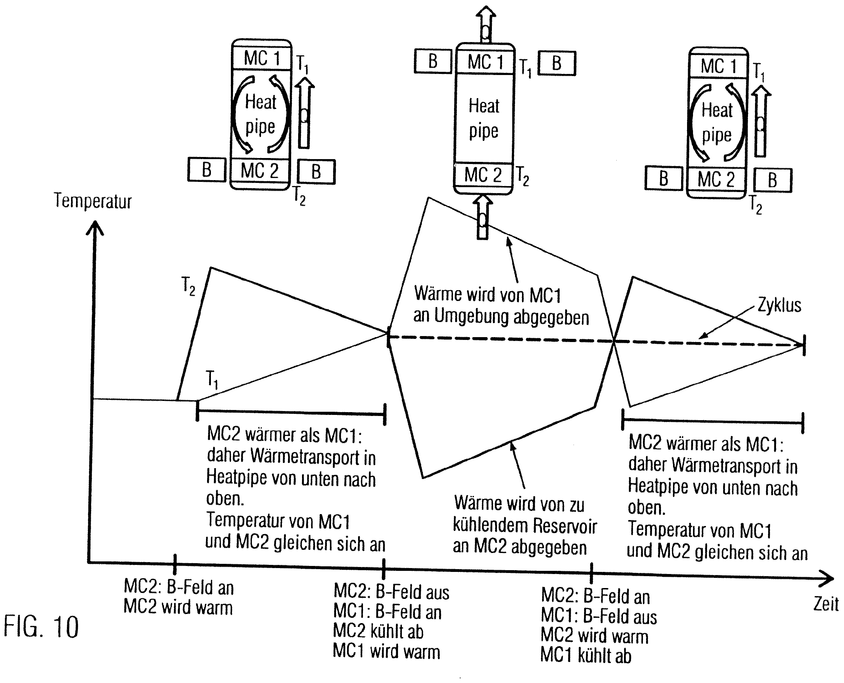

Figur 10 bringt in einem Temperatur-Zeit-Diagramm noch einmal die Wirkungsweise des mit zwei magnetokalorischen Materialien MC 1 und MC 2 im Inneren desselben versehenen Wärmerohres bzw. Thermosiphons 100 und damit die Wirkung als Klimatisierungseinrichtung aufgrund des elektro- oder magnetokalorischen Effektes zum Ausdruck und zwar unter Verlagerung des Magnetfeldes bzw. des Magneten 6 von unten nach oben zum Aufbau entsprechender kaskadierter Anordnungen zur Erhöhung des Wirkungsgrades.

In dem Diagramm ist einerseits der Temperaturverlauf für das magnetokalorische Material 4 MC 1 am oberen Ende des Thermosiphons bzw. Wärmerohres 100 und andererseits der Temperaturverlauf des unteren magnetokalorischen Materiales 4 MC 2 am unteren Ende des Wärmerohres bzw. Thermosiphons 100 qualitativ angegeben, wobei selbstverständlich in der Praxis diese Verläufe asymptotisch und nicht streng linear verlaufen.

Aus der Erläuterung des Temperatur-Zeitdiagrammes in Figur 10 ergibt sich die Wirkungsweise der Klimatisierungseinrichtung unmittelbar, so dass zusätzliche Erläuterungen nicht erforderlich erscheinen.

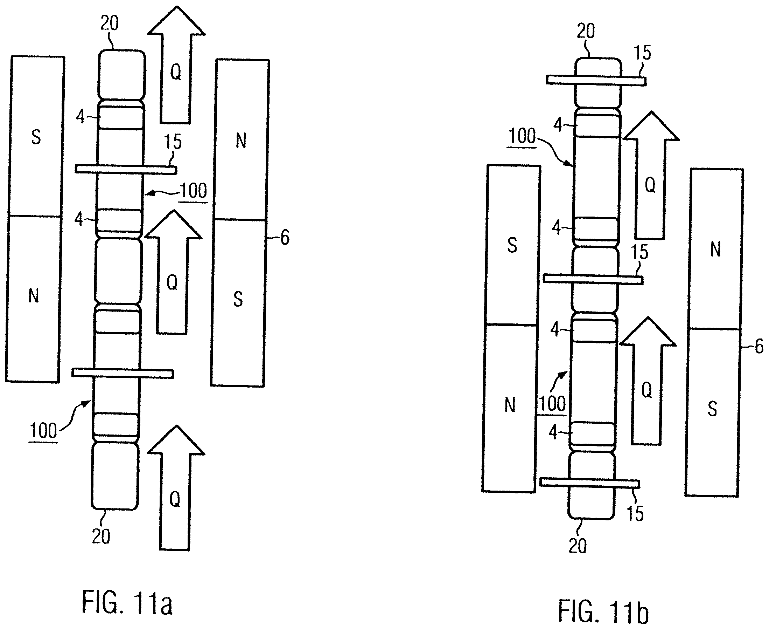

In Figur 11 ist schließlich nochmals eine kaskadierte Anordnung von Wärmerohren bzw. Thermosiphons 100 angegeben und zwar unter Vermittlung von Wärmetauschern 20 und regelbaren thermischen Verbindungen, die in den schematischen Diagramme nach Figur 11a und 11b als schwarze Querbalken angedeutet sind. Diese regelbaren thermischen Ventile können ähnlich der Kugelventile 15 in den Figuren 9a und 9b oder auch andere Schaltelemente zur Steuerung des Wärmeflusses von unten nach oben in den Darstellungen von Figuren 11a und 11b sein. Zugleich ist nochmals die Verlagerung des Magneten 6 bzw. damit auch des Magnetfeldes für den kontinuierlichen Wärmetransport verdeutlicht. Die regelbaren bzw. schaltbaren thermischen Verbindungselemente 20 können auf unterschiedliche Weise realisiert werden und dienen der Verbesserung der thermischen Anbindung zwischen den Wärmerohren bzw. Thermosiphons 100 sowie der Wärmekonvektion zur Umgebung.

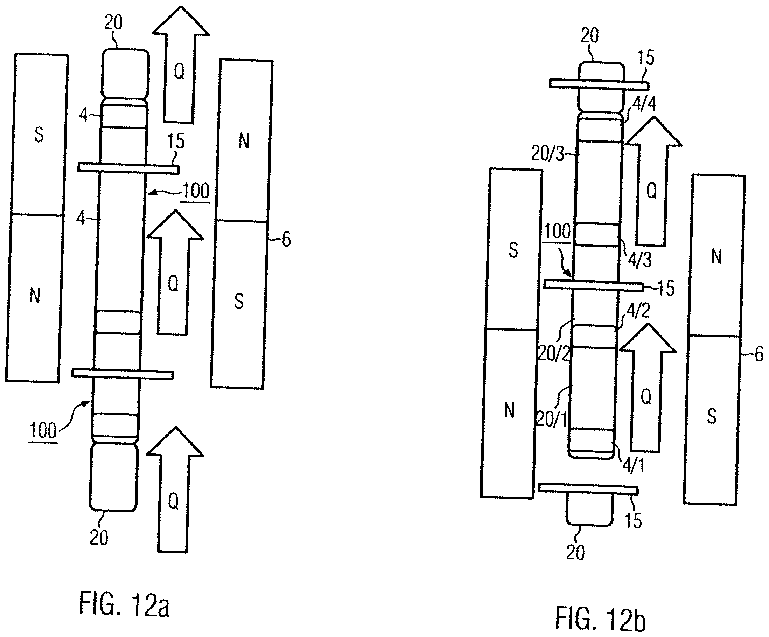

In einem weiteren Ausführungsbeispiel der vorliegenden Erfindung, das in den Figuren 12a und 12b dargestellt ist und in gewisser Weise als Modifikation des Ausführungsbeispiels mit einer Mehrzahl von Wärmerohren bzw. Thermosiphons 100 nach Figuren 11a und 11b aufgefasst werden kann, ist in dem Ausführungsbeispiel nach den Figuren 12a und 12b jeweils ein einziges Wärmerohr bzw. ein einziger Thermosiphon 100 gezeigt, der in einer Reihe von Arbeitsbereichen 20/1, 20/2 und 20/3 unterteilt ist, wobei die Anzahl der Unterteilungen des Thermosiphons bzw. Wärmerohres 100 variabel oder, wie auch die Größe des Wärmerohres 100, dem speziellen Anwendungszweck anpassbar ist.

Jeder Arbeitsbereich 20/1 bis 20/3 wird von einem magnetokalorischen Materialelement 4 begrenzt, wobei auch hier (wie bei der Kopplung mehrerer Wärmerohre nach den Figuren 11a und 11b) die Arbeitsbereiche 20/1 bis 20/3 durch jeweils gemeinsame Nutzung eines magnetokalorischen Materialelementes 4 durch Vervielfachung der Kühlleistung zu einem Kühlkörper (Wärmetauscher 20) am unteren Ende bzw. einem Wärmeübertrager (Wärmetauscher 20) am oberen Ende des Thermosiphons 100 führt.

Die magnetokalorischen Materialelemente 4 dichten druckdicht gegen die Innenwandung des Wärmerohres 100 ab, um zwischen sich jeweils die Arbeitsbereiche 20/1 bis 20/3 und damit das in diesen jeweiligen Bereichen befindliche Arbeitsmedium druckdicht abzuschließen, wobei, wie auch schon bisher erläutert, regelbare thermische Ventile 15 innerhalb der Arbeitsbereiche 20/1 oder 20/3 (Fig. 12a) oder auch an anderer Stelle (betreffend die Wärmetauscher 20 bzw. einen mittleren Arbeitsbereich 20/2 vorgesehen sein können. Die Magnetanordnungen 6 sind in diesem Fall durch Doppelmagnete jeweils in der Lage in ihren, in den Figuren 12a und 12b für die dortige Anordnung der Wärmerohre 100 gezeigten Wirkanordnungen jeweils nicht dem gleichen Arbeitsbereich 20/1 bis 20/3 zugehörige magnetokalorische Materialelemente 4 zu beeinflussen.

D. h. in der Anordnung von Figur 12a ist das magnetokalorische Materialelement 4/2 sowie das "übernächste" magnetokalorische Materialelement 4/4 in wärmeerzeugendem Einfluss des Magnetfeldes der Magnetanordnung 6, während die magnetokalorischen Materialelemente 4/1 und 4/3 nicht feldbeeinflusst und damit kühlwirksam sind. In der Anordnung nach Figur 12b sind umgekehrt die magnetokalorischen Materialelemente 4/1 und 4/3 jeweils im Einfluss des Magnetfeldes der Magnetanordnung 6 und bilden für das Arbeitsmedium 3 in den darüber liegenden Arbeitsbereichen 20/1 und 20/3 eine Wärmequelle.

Die Anordnungen nach den Ausführungsbeispielen gemäß Figuren 11a und 11b bzw. 12a und 12b können selbstverständlich auch miteinander kombiniert werden, d. h. es können Wärmerohre zu Wärmerohrkaskaden zusammengefasst werden, die ihrerseits im Inneren wiederum, jedenfalls zum Teil, aus einer Mehrzahl von Arbeitsbereichen, d. h. Wärmerohreinzelelementen bestehen.

Auch hier werden vorzugsweise unterschiedliche magnetokalorische Materialien mit unterschiedlichen Curie-Temperaturen aufgrund des in vertikaler Richtung nach oben zunehmenden Temperaturniveaus vorteilhaft eingesetzt.

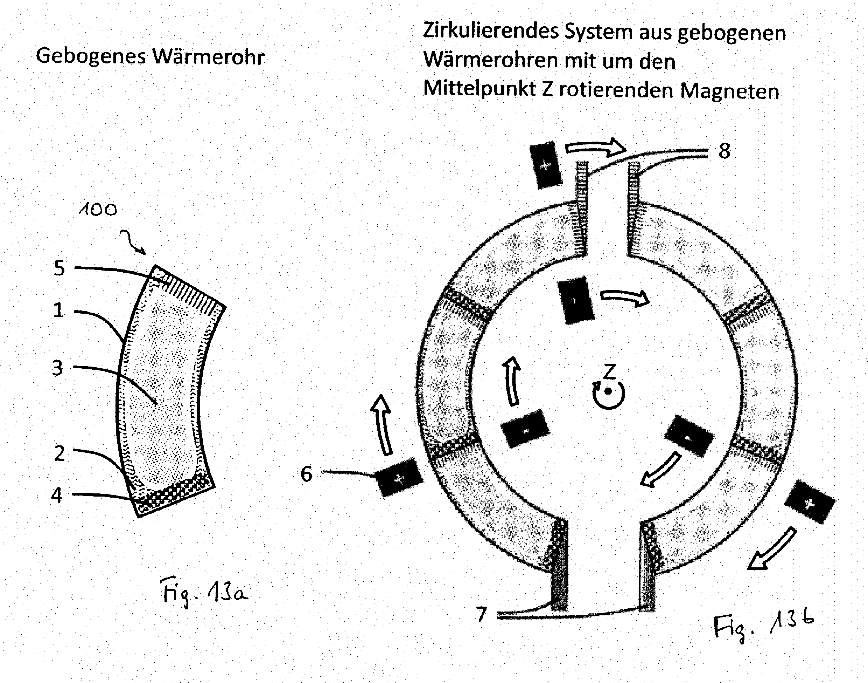

In Figur 13a ist ein Wärmerohr ähnlich denjenigen von Fig. 1 und Fig. 2 als ein weiteres Ausführungsbeispiel in gebogener Form aufgeführt. Die Form des Wärmerohres ist generell für die Funktion weniger entscheidend als die Lage. In Figur 13b ist ein aus gebogenen Wärmerohren aufgebautes System mit um den Punkt Z rotierenden Erzeugern eines elektrischen und/oder magnetischen Feldes dargestellt. Durch die um den Punkt Z rotierenden Felderzeuger kann ein kontinuierlicher Wärmetransport bewerkstelligt werden.

In anderen Weiterbildungen der vorliegenden Erfindung, die der Verknüpfung von Arbeitsmedium und elektro- und/oder magnetokalorischem Material in einem elektrischen und/oder magnetischen Feld als Wärmeerzeuger folgen, ist es auch möglich, elektro- oder magnetokalorisches Material, mit einem negativen elektro- oder magnetokalorischen Effekt zu verwenden, bei dem also die genau gegenteiligen Wirkungen eintreten, wobei dies ebenfalls zu einer entsprechenden "Umkehrung" der Anordnung der Felderzeuger führt.

Auch eine Kombination von elektro- oder magnetokalorischen Materialelementen mit einerseits konventionellen "(positivem)" und negativen elektro- oder magnetokalorischen Effekt und oder inversem kalorischen Effekt erscheint denkbar. Ein Ausführungsbeispiel wäre in diesem Fall, dass alle elektro- oder magnetokalorischen Materialelemente gleichzeitig unter Einfluss eines elektrischen und/oder magnetischen Feldes zu halten bzw. alle gleichzeitig auch dem Feldeinfluss zu entziehen wären, was insbesondere für eine "unbewegte" d. h. ruhende Anordnung spricht, wie sie z. B. auch durch Verwendung eines Elektromagneten vorteilhaft ausgestaltbar wäre.

Durch die Erfindung ist eine äußerst wirksame Klimatisierungseinrichtung geschaffen, die in einer innigen Verbindung von elektro- oder magnetokalorischen Materialien innerhalb eines Wärmerohres bzw. Thermosiphons besteht und zwar sowohl mit zumindest einem derartigen Element als auch einer Mehrzahl desselben, insbesondere zum Aufbau kaskadenförmiger Anordnungen.

## Patentansprüche

1. Klimatisierungseinrichtung mit zumindest einem Wärmerohr (100), insbesondere Thermosiphon, das zumindest ein Arbeitsmedium enthält, mit zumindest einem in das Wärmerohr (100) integrierten, insbesondere innerhalb desselben angeordneten, elektro- oder magnetokalorischen Material (4) im zumindest temporären Einfluss eines elektrischen und/oder magnetischen Feldes und einem, von einem ersten Wärmeübertragungsbereich zwischen dem elektro- oder magnetokalorischen Material (4) und dem Arbeitsmedium (2), zu einem zweiten Wärmeübertragungsbereich des Arbeitsmediums (2) gerichteten Wärmetransport (Q).

2. Klimatisierungseinrichtung nach Anspruch 1, **dadurch gekennzeichnet, dass** das Wärmerohr (100) eine Mehrzahl von Wärmeübertragungsbereichen zwischen einer Mehrzahl von elektro- oder magnetokalorischen Materialelementen (4) und zumindest einem Arbeitsmedium (2) enthält.

3. Klimatisierungseinrichtung nach Anspruch 1 oder 2, **dadurch gekennzeichnet dass** der erste Wärmeübertragungsbereich zumindest ein erstes elektro- oder magnetokalorisches Materialelement (4) im Bereich eines ersten, insbesondere unteren Endes des Wärmerohres (100) und der zweite Wärmeübertragungsbereich zumindest einen Kondensator im Bereich eines zweiten, insbesondere oberen Endes des Wärmerohres (100) aufweist, insbesondere das Wärmerohr (100) eine vertikale Anordnung aufweist und/oder dass der Kondensator ein elektro- oder magnetokalorisches Materialelement (4) aufweist, oder mit einem solchen verbunden oder aus diesem gebildet ist.

4. Klimatisierungseinrichtung nach zumindest einem der vorhergehenden Ansprüche 1 bis 3 **gekennzeichnet durch** zumindest einen ersten Wärmetauscher (7), insbesondere Kühlkörper, in wärmeleitender Verbindung mit einem ersten elektro- oder magnetokalorischen Materialelement (4), insbesondere an einem unteren Ende des Wärmerohres (100), und einem zweiten Wärmetauscher (8), insbesondere Wärmekörper, in wärmeleitender Verbindung mit zumindest einem Kondensator und/oder einem zweiten elektro- oder magnetokalorischen Materialelement (4) an einem zweiten, insbesondere einem oberen Ende des Wärmerohres (100).

5. Klimatisierungseinrichtung nach zumindest einem der vorhergehenden Ansprüche 1 bis 4 **gekennzeichnet durch** eine regelbare thermische Verbindung (15) zwischen dem ersten und zweiten Wärmeübertragungsbereich, vorzugsweise dass die regelbare thermische Verbindung (15) ein Druck- oder Thermoventil (15) zwischen dem ersten und zweiten Wärmeübertragungsbereich, insbesondere zwischen dem ersten, vorzugsweise unteren und dem zweiten vorzugsweise oberen Ende des Wärmerohres (100) ist.

6. Klimatisierungseinrichtung nach zumindest einem der vorhergehenden Ansprüche 1 bis 5 **gekennzeichnet durch** einen Felderzeuger (6) eines elektrischen und/oder magnetischen Feldes vorzugsweise mit einer relativen Beweglichkeit zwischen Wärmerohr (100) und Felderzeuger (6) eines elektrischen und/oder magnetischen Feldes, insbesondere für eine alternative Feldbeeinflussung des ersten oder zweiten Wärmeübertragungsbereiches, insbesondere eines ersten oder zweiten elektro- oder magnetokalorischen Materialelementes (4) in dem ersten und/oder zweiten Wärmeübertragungsbereich.

7. Klimatisierungseinrichtung nach zumindest einem der vorhergehenden Ansprüche 1 bis 6 **gekennzeichnet durch** einen Kondensator (8), insbesondere vorgesehen in Kombination mit einem elektro- oder magnetokalorischen Material (4) und einen Verdampfer, enthaltend elektro- oder magnetokalorisches Material oder bestehend aus diesem, zumindest letzterer temporär im elektrischen und/oder magnetischen Feld eines Felderzeugers (6).

8. Klimatisierungseinrichtung nach zumindest einem der vorhergehenden Ansprüche 1 bis 7 **gekennzeichnet durch** ein erstes elektro- oder magnetokalorisches Materialelement (4) in dem ersten Wärmeübergangsbereich und ein zweites elektro- oder magnetokalorisches Materialelement (4) in dem zweiten Wärmeübertragungsbereich, wobei beide elektro- oder magnetokalorischen Materialelemente (4) alternativ im elektrischen und/oder magnetischen Feld eines Felderzeugers (6) sind.

9. Klimatisierungseinrichtung nach zumindest einem der vorhergehenden Ansprüche 1 bis 8, **dadurch gekennzeichnet, dass** das elektro- oder magnetokalorische Materialelement (4) eine vergrößerte Kontaktoberfläche zu einem benachbarten Arbeitsfluid (2) aufweist, insbesondere die Kontaktoberfläche mikro- oder nanostrukturiert ist und/oder **dass** das Wärmerohr (100) in thermischer Kopplung mit zumindest einem Peltier-Element verbunden ist und/oder **durch** zumindest ein Wärmerohr (100), vorzugsweise einer Mehrzahl von Wärmerohren in Reihenschaltung, in im Wesentlichen vertikaler Anordnung.

10. Klimatisierungseinrichtung nach zumindest einem der vorhergehenden Ansprüche 1 bis 9 **dadurch gekennzeichnet, dass** das zumindest eine Wärmerohr (100) als geschaltete "thermische Diode" (Wärmestrom in nur eine Richtung) ausgeführt ist, insbesondere einen von dem ersten zu dem zweiten Ende des Wärmerohres (100) gerichteten Wärmefluss (Q) innerhalb des Wärmerohres (100) und/oder einen gerichteten Wärmefluss von einem ersten, insbesondere unteren Ende zu einem zweiten, insbesondere oberen Ende, als Ergebnis einer rotationsbedingten Zentrifugalkraft.

11. Klimatisierungseinrichtung nach zumindest einem der vorhergehenden Ansprüche 1 bis 10 **dadurch gekennzeichnet, dass** zumindest ein Teil des Gehäuses und/oder eines Dochtes des Wärmerohres (100) aus elektro- oder magnetokalorischem Material besteht.

12. Klimatisierungseinrichtung nach zumindest einem der vorhergehenden Ansprüche 1 bis 11 **gekennzeichnet durch** einen strukturierten Verdampfer aus elektro- oder magnetokalorischem Material (4) mit integriertem Wärmeleiter (10), insbesondere aus einem thermisch gut, elektrisch aber schlecht leitendem Material und/oder **durch** einen strukturierten Verdampfer aus elektro- oder magnetokalorischem Material (4) wärmeübertragend verbunden insbesondere mit integriertem Wärmeleiter (10), vorzugsweise an einer Grenzfläche zwischen flüssigem und gasförmigem Arbeitsfluid (2; 3), insbesondere angeordnet über einem Sumpf innerhalb des Wärmerohres (100) und/oder **durch** einen strukturierten Abschluss des Wärmerohres aus elektro- oder magnetokalorischem Material (4), insbesondere mit einer Mehrzahl von Wärmeleitern (10) innerhalb des strukturierten Abschlusses in wärmeleitendem Kontakt mit einem Wärmeübertragerelement (7).

13. Klimatisierungseinrichtung nach zumindest einem der vorhergehenden Ansprüche 1 bis 12 **gekennzeichnet durch** ein Wärmerohr (100) mit einer Mehrzahl elektrischer Isolatorelemente (4b), insbesondere paralleler Streben innerhalb des magnetokalorischem Materials (4) und/oder **durch** zumindest ein, insbesondere regelbares, thermisches Verbindungselement (15; 20) zwischen zwei abfolgenden Wärmerohren (100 vorzugsweise **dass** in dem Wärmerohr (100) eine Mehrzahl von Arbeitsbereichen (20/1 bis 20/3) jeweils begrenzt durch eine elektro- oder magnetokalorisches Materialelement (4) vorgesehen und jedem Arbeitsbereich ein Arbeitsfluid aufgenommen, insbesondere das Wärmerohr (100) durch das elektro- oder magnetokalorische Materialelement (4) druckdicht abgedichtet ist und/oder **durch** eine regelbare thermische Verbindung (15) in zumindest einem Arbeitsbereich (20/1) bis (20/3) des Wärmerohres (100).

14. Klimatisierungseinrichtung nach zumindest einem der vorhergehenden Ansprüche 1 bis 13 **gekennzeichnet durch** eine zumindest teilweise Anordnung von elektro- oder magnetokalorischem Material mit negativem elektro- oder magnetokalorischem Effekt und oder inversem kalorischen Effekt, vorzugsweise eine kombinierte Verwendung von elektro- oder magnetokalorischem Material innerhalb des Wärmerohres (100) mit nicht-inversem und inversem elektro- oder magnetokalorischem Effekt und einer stationären Anordnung von schaltbarem Felderzeuger (6) und Wärmerohr (10) zueinander.

15. Klimatisierungseinrichtung nach zumindest einem der vorhergehenden Ansprüche 1 bis 14 **dadurch gekennzeichnet, dass** das elektro- oder magnetokalorische Material (4) mit seiner Curie-Temperatur an eine jeweilige örtliche Temperatur- bzw. Arbeitsbereich des Wärmerohres (100) angepasst ist, in dem das elektro- oder magnetokalorische Material (4) angeordnet ist.

## Claims

1. Air-conditioning device having at least one heat pipe (100), especially a thermosiphon, which contains at least one working medium, having at least one electrocaloric or magnetocaloric material (4) integrated into the heat pipe (100), especially arranged inside the latter, at least temporarily under the influence of an electric and/or magnetic field, and having transfer of heat (Q) directed from a first heat transfer region between the electrocaloric or magnetocaloric material (4) and the working medium (2), to a second heat transfer region of the working medium (2).

2. Air-conditioning device according to claim 1, **characterised in that** the heat pipe (100) contains a plurality of heat transfer regions between a plurality of electrocaloric or magnetocaloric material elements (4) and at least one working medium (2).

3. Air-conditioning device according to claim 1 or 2, **characterised in that** the first heat transfer region has at least one first electrocaloric or magnetocaloric material element (4) in the region of a first, especially lower end of the heat pipe (100), and the second heat transfer region has at least one condenser in the region of a second, especially upper end of the heat pipe (100), the heat pipe (100) especially having a vertical arrangement, and/or that the condenser has an electrocaloric or magnetocaloric material element (4) or is connected to such an element or is formed therefrom.

4. Air-conditioning device according to at least one of preceding claims 1 to 3, **characterised by** at least one first heat exchanger (7), especially a cooling body, in heat-conducting connection with a first electrocaloric or magnetocaloric material element (4), especially at a lower end of the heat pipe (100), and a second heat exchanger (8), especially a heating body, in heat-conducting connection with at least one condenser and/or a second electrocaloric or magnetocaloric material element (4) at a second end, especially an upper end, of the heat pipe (100).

5. Air-conditioning device according to at least one of preceding claims 1 to 4, **characterised by** a controllable thermal connection (15) between the first and second heat transfer regions, preferably that the controllable thermal connection (15) is a pressure valve or thermal valve (15) between the first and second heat transfer regions, especially between the first, preferably lower, end and the second, preferably upper, end of the heat pipe (100).

6. Air-conditioning device according to at least one of preceding claims 1 to 5, **characterised by** a field generator (6) of an electric and/or magnetic field, preferably with relative movability between the heat pipe (100) and the field generator (6) of an electric and/or magnetic field, especially for exerting an alternative field influence on the first or second heat transfer region, especially on a first or second electrocaloric or magnetocaloric material element (4) in the first and/or second heat transfer region(s).

7. Air-conditioning device according to at least one of preceding claims 1 to 6, **characterised by** a condenser (8), especially provided in combination with an electrocaloric or magnetocaloric material (4), and an evaporator, containing electrocaloric or magnetocaloric material or consisting thereof, at least the evaporator being temporarily in the electric and/or magnetic field of a field generator (6).

8. Air-conditioning device according to at least one of preceding claims 1 to 7, **characterised by** a first electrocaloric or magnetocaloric material element (4) in the first heat transfer region and a second electrocaloric or magnetocaloric material element (4) in the second heat transfer region, wherein both electrocaloric or magnetocaloric material elements (4) are alternatively in the electric and/or magnetic field(s) of a field generator (6).

9. Air-conditioning device according to at least one of preceding claims 1 to 8, **characterised in that** the electrocaloric or magnetocaloric material element (4) has an enlarged contact surface to an adjacent working fluid (2), the contact surface especially being microstructured or nanostructured, and/or **that** the heat pipe (100) is connected in thermal coupling to at least one Peltier element, and/or by at least one heat pipe (100), preferably a plurality of heat pipes in series connection, in a substantially vertical arrangement.

10. Air-conditioning device according to at least one of preceding claims 1 to 9, **characterised in that** the at least one heat pipe (100) is implemented as a switched "thermal diode" (flow of heat in only one direction), especially a flow of heat (Q) directed from the first to the second end of the heat pipe (100) inside the heat pipe (100) and/or a directed flow of heat from a first, especially lower end to a second, especially upper end, as a result of a rotation-induced centrifugal force.

11. Air-conditioning device according to at least one of preceding claims 1 to 10, **characterised in that** at least a portion of the housing and/or a wick of the heat pipe (100) consists of electrocaloric or magnetocaloric material.

12. Air-conditioning device according to at least one of preceding claims 1 to 11, **characterised by** a structured evaporator made of electrocaloric or magnetocaloric material (4) having an integrated heat conductor (10), especially made of a material having good thermal conductivity but poor electrical conductivity, and/or **by** a structured evaporator made of electrocaloric or magnetocaloric material (4) in heat-transmitting connection especially with the integrated heat conductor (10), preferably at an interface between liquid and gaseous working fluid (2; 3), especially arranged above a sump inside the heat pipe (100), and/or **by** a structured closure of the heat pipe made of electrocaloric or magnetocaloric material (4), especially with a plurality of heat conductors (10) inside the structured closure in heat-conducting contact with a heat-transfer element (7).

13. Air-conditioning device according to at least one of preceding claims 1 to 12, **characterised by** a heat pipe (100) having a plurality of electrical insulator elements (4b), especially parallel bars inside the magnetocaloric material (4), and/or **by** at least one, especially controllable, thermal connecting element (15; 20) between two successive heat pipes (100), preferably **that** in the heat pipe (100) there is provided a plurality of working regions (20/1 to 20/3) each delimited by an electrocaloric or magnetocaloric material element (4) and each working region accommodates a working fluid, the heat pipe (100) especially being pressure-tightly sealed by the electrocaloric or magnetocaloric material element (4), and/or **by** a controllable thermal connection (15) in at least one working region (20/1) to (20/3) of the heat pipe (100).

14. Air-conditioning device according to at least one of preceding claims 1 to 13, **characterised by** an at least partial arrangement of electrocaloric or magnetocaloric material having a negative electrocaloric or magnetocaloric effect and/or an inverse caloric effect, preferably a combined use of electrocaloric or magnetocaloric material inside the heat pipe (100) having a non-inverse and inverse electrocaloric or magnetocaloric effect, and a stationary arrangement of switchable field generator (6) and heat pipe (10) relative to one another.

15. Air-conditioning device according to at least one of preceding claims 1 to 14, **characterised in that** the electrocaloric or magnetocaloric material (4) is matched in its Curie temperature to a respective local temperature region or working region of the heat pipe (100) in which the electrocaloric or magnetocaloric material (4) is arranged.

## Revendications

1. Dispositif de climatisation doté d'au moins un caloduc (100), en particulier un thermosiphon, qui contient au moins un milieu de travail, d'au moins un matériau électro- ou magnétocalorique (4) intégré dans le caloduc (100), en particulier disposé à l'intérieur de celui-ci, soumis à l'influence au moins temporaire d'un champ électrique et/ou magnétique, et d'un transport de chaleur (Q) dirigé d'une première zone de transfert de chaleur entre le matériau électro- ou magnétocalorique (4) et le milieu de travail (2) vers une deuxième zone de transfert de chaleur du milieu de travail (2).

2. Dispositif de climatisation selon la revendication 1, **caractérisé en ce que** le caloduc (100) contient une pluralité de zones de transfert de chaleur entre une pluralité d'éléments en matériau électro- ou magnétocalorique (4) et au moins un milieu de travail (2).

3. Dispositif de climatisation selon la revendication 1 ou 2, **caractérisé en ce que** la première zone de transfert de chaleur présente au moins un premier élément en matériau électro- ou magnétocalorique (4) dans la zone d'une première extrémité, en particulier inférieure, du caloduc (100) et la deuxième zone de transfert de chaleur présente au moins un condenseur dans la zone d'une deuxième extrémité, en particulier supérieure, du caloduc (100), en particulier le caloduc (100) présente une disposition verticale et/ou **en ce que** le condenseur présente un élément en matériau électro- ou magnétocalorique (4) ou est relié à un tel élément ou formé à partir d'un tel élément.

4. Dispositif de climatisation selon au moins l'une des revendications précédentes 1 à 3, **caractérisé par** au moins un premier échangeur de chaleur (7), en particulier un dissipateur de chaleur, en liaison conductrice de chaleur avec un premier élément en matériau électro- ou magnétocalorique (4), en particulier à une extrémité inférieure du caloduc (100), et un deuxième échangeur de chaleur (8), en particulier un corps chauffant, en liaison conductrice de chaleur avec au moins un condenseur et/ou un deuxième élément en matériau électro- ou magnétocalorique (4) à une deuxième extrémité, en particulier supérieure, du caloduc (100).

5. Dispositif de climatisation selon au moins l'une des revendications précédentes 1 à 4, **caractérisé par** une liaison thermique réglable (15) entre la première et la deuxième zone de transfert de chaleur, de préférence en ce que la liaison thermique réglable (15) est une vanne de pression ou thermique (15) entre la première et la deuxième zone de transfert de chaleur, en particulier entre la première extrémité, de préférence inférieure, et la deuxième extrémité, de préférence supérieure, du caloduc (100).

6. Dispositif de climatisation selon au moins l'une des revendications précédentes 1 à 5, **caractérisé par** un générateur de champ (6) d'un champ électrique et/ou magnétique, de préférence avec une mobilité relative entre le caloduc (100) et le générateur de champ (6) d'un champ électrique et/ou magnétique, en particulier pour soumettre au champ alternativement la première ou la deuxième zone de transfert de chaleur, en particulier un premier ou un deuxième élément en matériau électro- ou magnétocalorique (4) dans la première et/ou la deuxième zone de transfert de chaleur.

7. Dispositif de climatisation selon au moins l'une des revendications précédentes 1 à 6, **caractérisé par** un condenseur (8), en particulier prévu en combinaison avec un matériau électro- ou magnétocalorique (4), et un évaporateur contenant un matériau électro- ou magnétocalorique ou consistant en un tel matériau, ce dernier se trouvant au moins temporairement dans le champ électrique et/ou magnétique d'un générateur de champ (6).

8. Dispositif de climatisation selon au moins l'une des revendications précédentes 1 à 7, **caractérisé par** un premier élément en matériau électro- ou magnétocalorique (4) dans la première zone de transfert de chaleur et un deuxième élément en matériau électro- ou magnétocalorique (4) dans la deuxième zone de transfert de chaleur, les deux éléments en matériau électro- ou magnétocalorique (4) se trouvant alternativement dans le champ électrique et/ou magnétique d'un générateur de champ (6).

9. Dispositif de climatisation selon au moins l'une des revendications précédentes 1 à 8, **caractérisé en ce que** l'élément en matériau électro- ou magnétocalorique (4) présente une surface de contact agrandie avec un fluide de travail (2) adjacent, en particulier la surface de contact est micro- ou nanostructurée et/ou **en ce que** le caloduc (100) est relié par couplage thermique à au moins un élément Peltier et/ou **par** au moins un caloduc (100), de préférence une pluralité de caloducs couplés en série, dans une disposition sensiblement verticale.

10. Dispositif de climatisation selon au moins l'une des revendications précédentes 1 à 9, **caractérisé en ce que** ledit au moins un caloduc (100) est réalisé sous la forme d'une « diode thermique » commutée (flux de chaleur dans une seule direction), en particulier un flux de chaleur (Q) dirigé de la première vers la deuxième extrémité du caloduc (100) à l'intérieur du caloduc (100) et/ou un flux de chaleur dirigé d'une première extrémité, en particulier inférieure, vers une deuxième extrémité, en particulier supérieure, comme résultat d'une force centrifuge due à la rotation.

11. Dispositif de climatisation selon au moins l'une des revendications précédentes 1 à 10, **caractérisé en ce qu'**au moins une partie du boîtier et/ou d'une mèche du caloduc (100) est constituée d'un matériau électro- ou magnétocalorique.

12. Dispositif de climatisation selon au moins l'une des revendications précédentes 1 à 11, **caractérisé par** un évaporateur structuré en matériau électro- ou magnétocalorique (4) avec un conducteur thermique intégré (10), en particulier dans un matériau bon conducteur de la chaleur mais mauvais conducteur de l'électricité et/ou **par** un évaporateur structuré en matériau électro- ou magnétocalorique (4) relié de manière à transmettre la chaleur, en particulier avec un conducteur thermique intégré (10), de préférence à une interface entre un fluide de travail liquide et gazeux (2 ; 3), en particulier disposé au-dessus d'un collecteur à l'intérieur du caloduc (100) et/ou **par** une fermeture structurée du caloduc en matériau électro- ou magnétocalorique (4), en particulier avec une pluralité de conducteurs thermiques (10) à l'intérieur de la fermeture structurée en contact thermo conducteur avec un élément transmetteur de chaleur (7).

13. Dispositif de climatisation selon au moins l'une des revendications précédentes 1 à 12, **caractérisé par** un caloduc (100) avec une pluralité d'éléments isolants électriques (4b), en particulier des entretoises parallèles à l'intérieur du matériau magnétocalorique (4), et/ou **par** au moins un élément de liaison thermique (15 ; 20), en particulier réglable, entre deux caloducs successifs (100), de préférence **en ce que** dans le caloduc (100) est prévue une pluralité de zones de travail (20/1 à 20/3), chacune limitée par un élément en matériau électro- ou magnétocalorique (4), et un fluide de travail est reçu dans chaque zone de travail, en particulier le caloduc (100) est rendu étanche à la pression par l'élément en matériau électro- ou magnétocalorique (4), et/ou **par** une liaison thermique réglable (15) dans au moins une zone de travail (20/1) à (20/3) du caloduc (100).

14. Dispositif de climatisation selon au moins l'une des revendications précédentes 1 à 13, **caractérisé par** une disposition au moins partielle de matériau électro- ou magnétocalorique avec effet électro- ou magnétocalorique négatif et/ou effet calorique inverse, de préférence une utilisation combinée de matériau électro- ou magnétocalorique à l'intérieur du caloduc (100) avec effet électro- ou magnétocalorique non inverse et inverse et une disposition fixe du générateur de champ commutable (6) et du caloduc (10) l'un par rapport à l'autre.

15. Dispositif de climatisation selon au moins l'une des revendications précédentes 1 à 14, **caractérisé en ce que** le matériau électro- ou magnétocalorique (4) est adapté par sa température de Curie à une plage de température locale ou une zone de travail du caloduc (100) dans laquelle le matériau électro- ou magnétocalorique (4) est disposé.
